(19) Europäisches Patentamt
European Patent Office
Office européen des brevets

(11) EP 2 916 148 A1

(12) # EUROPEAN PATENT APPLICATION
published in accordance with Art. 153(4) EPC

(43) Date of publication:
**09.09.2015 Bulletin 2015/37**

(21) Application number: **13850134.1**

(22) Date of filing: **18.10.2013**

(51) Int Cl.:
***G02B 1/11*** (2015.01) ***B32B 7/02*** (2006.01)
***G01J 3/50*** (2006.01) ***G02B 5/26*** (2006.01)
***G02B 5/28*** (2006.01) ***G02C 7/00*** (2006.01)

(86) International application number:
**PCT/JP2013/078280**

(87) International publication number:
**WO 2014/069250 (08.05.2014 Gazette 2014/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.11.2012 JP 2012243956**

(71) Applicant: **Nikon-Essilor Co., Ltd.**
**Tokyo 130-0026 (JP)**

(72) Inventors:
- **MIYAMOTO So**
  **Tokyo 130-0026 (JP)**
- **TOMODA Masaoki**
  **Tokyo 130-0026 (JP)**

(74) Representative: **Viering, Jentschura & Partner**
**Patent- und Rechtsanwälte**
**Grillparzerstrasse 14**
**81675 München (DE)**

(54) **OPTICAL COMPONENT, METHOD FOR PRODUCING OPTICAL COMPONENT, AND METHOD FOR QUANTITATIVELY DETERMINING GHOST LIGHT**

(57) An optical component is characterized in that: a spectral characteristics curve of a multilayer film provided on a first surface of a plastic base has one local maximum at a first wavelength in a wavelength range of 380 nm to 780 nm and has one local minimum at a second wavelength 200 nm or less longer than the first wavelength; an average reflectivity of the multilayer film provided on the first surface in a wavelength range of the first wavelength ± 25 nm is 50% or less; an average reflectivity of a multilayer film provided on a second surface of the plastic base relative to the average reflectivity of the multilayer film provided on the first surface is 40% or less in the wavelength range of the first wavelength ± 25 nm; and a spectral characteristics curve of the multilayer film provided on the second surface does not have a local maximum in the wavelength range of the first wavelength ± 25 nm.

FIG. 1

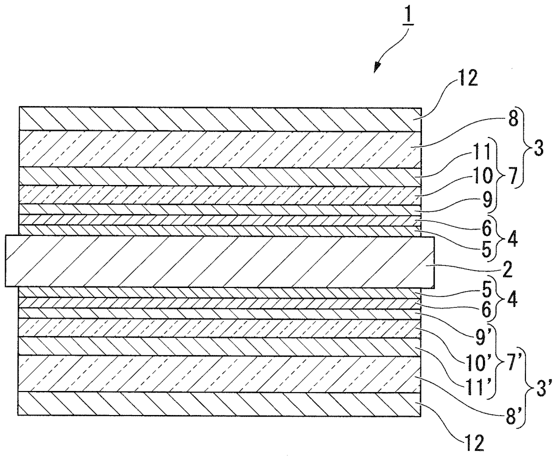


EP 2 916 148 A1

## Description

### TECHNICAL FIELD

The present invention relates to an optical component, a method of manufacturing an optical component, and a method of quantifying ghost light.

Priority is claimed on Japanese Patent Application No. 2012-243956 filed on November 5, 2012, the contents of which are incorporated herein by reference.

### BACKGROUND

In recent years, for spectacle lenses, plastic lenses have been used in many cases due to advantages such as lightweight, excellent impact resistance, and ease of dyeing. In the plastic lens for use in a spectacle lens, an antireflection film is generally provided on both sides of the plastic lens for the purpose of preventing surface reflection. Generally, the antireflection film for a spectacle lens has a low reflection characteristic (wideband low-reflection characteristic) over the entire visible region of 400 nm to 700 nm.

In the case of an optical component such as a spectacle lens, an optical component which is provided with a plastic base and an antireflection film disposed on the base as disclosed in, for example, Patent Documents 1 to 3 is known.

[Related Art Documents]

[Patent Documents]

[Patent Document 1] Japanese Unexamined Patent Application, First Publication No. H11-30703
[Patent Document 2] Japanese Unexamined Patent Application, First Publication No. 2006-251760
[Patent Document 3] Japanese Unexamined Patent Application, First Publication No. 2007-127681

### SUMMARY OF INVENTION

### PROBLEMS TO BE SOLVED BY THE INVENTION

However, from recent studies, it is known that the low reflection characteristic over the entire visible region is not necessarily desirable for visibility and eye health. For example, by cutting the blue region (380 nm to 500 nm) of visible light, glare is reduced, and visibility and contrast are improved.

Further, regarding eye health, since the blue region (380 nm to 500 nm) of visible light has a high intensity of energy, it is said to be a cause of giving undesirable impact to the retina and the like.

As means for cutting visible light, a dyed lens such as sunglasses is known. However, in the dyed lens, the entire visible region is cut, and thus visibility may deteriorate due to a reduction in light intensity. Further, there is a method of cutting visible light by reflecting the light at an optical multilayer film on a spectacle lens surface.

However, according to the method, the reflectivity of the multilayer film is high, and there is a possibility that strong multiple reflection in the lens may occur and sharp ghost light may come into sight.

An object of an aspect of the present invention is to provide an optical component which has an antiglare effect, reduces feeling of fatigue, is effective for prevention of eye trouble, and is excellent in visibility while having a relatively high reflectivity, and a method of manufacturing the optical component. Further, an object of an aspect of the present invention is to provide a method of quantifying ghost light arising from multiple reflection of light in the optical component.

### MEANS FOR SOLVING THE PROBLEM

An optical component according to an aspect of the present invention includes: a plastic base; and a multilayer film provided on each of both surfaces including a first surface and a second surface of the plastic base, wherein: a spectral characteristics curve indicating a relationship between wavelength and reflectivity of the multilayer film provided on the first surface of the plastic base has one local maximum at a first wavelength in a wavelength range of 380 nm to 780 nm and has one local minimum at a second wavelength 200 nm or less longer than the first wavelength; an average reflectivity of the multilayer film provided on the first surface in a wavelength range of the first wavelength ± 25 nm is 50% or less; an average reflectivity of the multilayer film provided on the second surface of the plastic base relative to the average reflectivity of the multilayer film provided on the first surface is 40% or less in the wavelength range of the

first wavelength ± 25 nm; and a spectral characteristics curve indicating a relationship between wavelength and reflectivity of the multilayer film provided on the second surface of the plastic base does not have a local maximum in the wavelength range of the first wavelength ± 25 nm.

A method of manufacturing an optical component according to another aspect of the present invention is a method of manufacturing an optical component that is provided with a plastic base and a multilayer film provided on each of both surfaces including a first surface and a second surface of the plastic base, the method including: a step of heating the plastic base; and a step of forming the multilayer film on the plastic base after adjusting a temperature of the plastic base to a predetermined temperature by the heating, wherein the step of forming the multilayer film has a process of forming a high refractive index layer having a multilayer structure by alternately applying a high refractive index material and a low refractive index material in multilayers and has a process of forming, on the high refractive index layer, a low refractive index layer formed by a low refractive index material having a lower refractive index than a refractive index of the high refractive index layer, and wherein a spectral characteristics curve indicating a relationship between wavelength and reflectivity of the multilayer film provided on the first surface of the plastic base has one local maximum at a first wavelength in a wavelength range of 380 nm to 780 nm and has one local minimum at a second wavelength 200 nm or less longer than the first wavelength, an average reflectivity of the multilayer film provided on the first surface in a wavelength range of the first wavelength ± 25 nm is 50% or less, an average reflectivity of the multilayer film provided on the second surface of the plastic base in the wavelength range of the first wavelength ± 25 nm is 40% or less of the average reflectivity of the multilayer film provided on the first surface, and a spectral characteristics curve indicating a relationship between wavelength and reflectivity of the multilayer film provided on the second surface of the plastic base does not have a local maximum in the wavelength range of the first wavelength ± 25 nm.

A method of quantifying ghost light according to another aspect of the present invention is a method of quantifying ghost light arising from multiple reflection of light in an optical component that is provided with a plastic base and a multilayer film provided on each of both surfaces including a first surface and a second surface of the plastic base, the method including: obtaining $A^n(\lambda)$ from a spectral reflectivity $R_1(\lambda)$ [%] of a multilayer film provided on the first surface, a spectral reflectivity $R_2(\lambda)$ [%] of a multilayer film provided on the second surface, and Expression (1) below
[Equation 1]

$$A^n(\lambda) = \left( \frac{R_2(\lambda)}{100} \times \frac{R_1(\lambda)}{100} \right)^n \quad \cdots\cdots \quad (1)$$

(in Expression (1), n represents an integer of 1 or more);

obtaining a spectral characteristic $T_{gn}(\lambda)$ [%] of ghost light due to multiple reflection in an optical component from the $R_1(\lambda)$, the $R_2(\lambda)$, the $A^n(\lambda)$, an optical absorptivity $F(\lambda)$ [%] by the plastic base, and Expression (2) below
[Equation 2]

$$T_{gn}(\lambda) = \sum_{n=1}^{\infty} \frac{100 - R_1(\lambda)}{100} \times \frac{100 - R_2(\lambda)}{100} \times A^n(\lambda) \times F^{2n+1}(\lambda) \quad \cdots\cdots \quad (2)$$

(in Expression (2), n represents an integer of 1 or more);

obtaining K from a relative spectral intensity $S(\lambda)$ of a standard light source (D65), a color matching function $x(\lambda)y(\lambda)z(\lambda)$, and Expression (3) below in accordance with JIS8701 by using the $T_{gn}(\lambda)$;
[Equation 3]

$$K = \frac{100}{\int_{380}^{780} S(\lambda)\bar{y}(\lambda)d\lambda} \quad \cdots\cdots \quad (3)$$

obtaining a Y value of tristimulus values XYZ from the K, the $S(\lambda)$, the color matching function $x(\lambda)y(\lambda)z(\lambda)$, the $T_{gn}(\lambda)$, and Expression (4) below; and
[Equation 4]

$$Y = K \int_{380}^{780} S(\lambda)\bar{y}(\lambda)T_{gn}(\lambda)d\lambda \cdot \cdot \cdot \cdot \quad (4)$$

setting the Y value as the intensity of ghost light.

ADVANTAGE OF THE INVENTION

According to an optical component of an aspect of the present invention, a sufficient antiglare effect can be obtained while maintaining excellent visibility even in a case where a multilayer film having a high reflectivity is provided.

Further, according to a method of manufacturing an optical component of an aspect of the present invention, it is possible to provide an optical component with reduced multiple reflection in a lens, with which it is easy to see, and which has optical characteristics effective for prevention of fatigue and eye trouble.

BRIEF DESCRIPTION OF THE DRAWINGS

FIG. 1 is a schematic diagram showing an example of an optical component according to a first embodiment.
FIG. 2 is a graph showing a spectral characteristic of the optical component according to the first embodiment.
FIG. 3 is a schematic diagram showing an example of a deposition apparatus according to the first embodiment.
FIG. 4 is a schematic diagram showing an example of a film formation apparatus according to the first embodiment.
FIG. 5A is a graph showing a spectral characteristic of a lens first surface of Example 1.
FIG. 5B is numerical data of the spectral characteristic of FIG. 5A.
FIG. 6A is a graph showing a spectral characteristic of a lens second surface of Example 1.
FIG. 6B is numerical data of the spectral characteristic of FIG. 6A.
FIG. 7A is a graph showing a spectral characteristic of a lens first surface of Example 2.
FIG. 7B is numerical data of the spectral characteristic of FIG. 7A.
FIG. 8A is a graph showing a spectral characteristic of a lens second surface of Example 2.
FIG. 8B is numerical data of the spectral characteristic of FIG. 8A.
FIG. 9A is a graph showing a spectral characteristic of a lens first surface of Example 3.
FIG. 9B is numerical data of the spectral characteristic of FIG. 9A.
FIG. 10A is a graph showing a spectral characteristic of a lens second surface of Example 3.
FIG. 10B is numerical data of the spectral characteristic of FIG. 10A.
FIG. 11A is a graph showing a spectral characteristic of both lens surfaces of Comparative Example 1.
FIG. 11B is numerical data of the spectral characteristic of FIG. 11A.
FIG. 12A is a graph showing a spectral characteristic of both lens surfaces of Comparative Example 2.
FIG. 12B is numerical data of the spectral characteristic of FIG. 12A.

DESCRIPTION OF EMBODIMENTS

Hereinafter, embodiments of the present invention will be described in detail.

The embodiments are described in detail to achieve a better understanding of the points of the invention, but the present invention is not limited thereto unless otherwise stated.

[Optical Component]

FIG. 1 is a sectional side view schematically showing an optical component according to an embodiment of the present invention. The reference numeral 1 in FIG. 1 represents an optical component for a spectacle lens.

The optical component 1 includes a plastic base 2 and an inorganic multilayer film 3 disposed on a first surface of the plastic base 2. In the present embodiment, a functional thin film 4 is disposed between the first surface of the plastic base 2 and the inorganic multilayer film 3. In the present embodiment, the functional thin film 4 is formed by a primer layer 5 and a hard coating layer 6.

The plastic base 2 is made of, for example, transparent plastic such as an acryl-based resin, a thiourethane-based resin, a methacryl-based resin, an allyl-based resin, an episulfide-based resin, a polycarbonate-based resin, a polyurethane-based resin, a polyester-based resin, a polystyrene-based resin, an episulfide resin, a polyethersulfone resin, a poly-4-methylpentene-1 resin, a diethylene glycol bis allyl carbonate resin (CR-39), a polyvinyl chloride resin, a halogen-containing copolymer, and a sulfur-containing copolymer.

Further, in the present embodiment, for example, one of 1.50, 1.60, 1.67, and 1.74 is selected and used as a refractive index (nd) of the plastic base 2. When the refractive index of the plastic base 2 is set to 1.6 or greater, an allyl carbonate-based resin, an acrylate-based resin, a methacrylate-based resin, a thiourethane-based resin and the like can be used for the plastic base 2.

Further, the plastic base 2 may not be transparent, or may be colored if it is translucent. The transmissivity of the colored plastic base 2 can be 5% to 85%.

The functional thin film 4 is disposed between the plastic base 2 and the inorganic multilayer film 3 as described above, and is formed of the primer layer 5 which is disposed in contact with the plastic base 2 and the hard coating layer 6 which is disposed in contact with the primer layer 5 and in contact with the inorganic multilayer film 3.

The primer layer 5 is used to improve the adhesion between the plastic base 2 and the hard coating layer 6 and functions as an adhesion layer. In addition, the primer layer 5 is also used to absorb the impact on the optical component 1 and functions as an impact absorption layer.

The primer layer 5 contains a polyurethane-based resin as a main component, and in the present embodiment, the primer layer 5 is a polyurethane-based resin containing, for example, particulates of an inorganic material. Note that, the primer layer 5 may include at least one type of an acryl-based resin, a methacryl-based resin, and an organosilicon-based resin. The thickness (actual thickness) of the primer layer 5 can be about 0.5 $\mu$m to about 1.0 $\mu$m.

The primer layer 5 can be formed with a predetermined thickness on the plastic base 2 by dipping the plastic base 2 in a liquid for forming the primer layer 5 and then lifting and drying the plastic base 2. As the liquid for forming the primer layer 5, for example, a liquid in which a resin to be the primer layer 5 and an inorganic oxide particulate sol are dispersed or dissolved in water or an alcohol-based solvent and mixed therewith can be used.

The hard coating layer 6 has a function of protecting the plastic base 2 and suppressing impact to the plastic base 2 and functions as an abrasion-resistant film.

The hard coating layer 6 is formed of, for example, an organosiloxane-based hard coating layer. The organosiloxane-based hard coating layer is a layer in which particulates of inorganic oxide are dispersed in an organosiloxane-based resin. As the inorganic oxide, for example, rutile-type titanium oxide and oxides of silicon, tin, zirconium, and antimony are used. In addition, the hard coating layer 6 may be, for example, a colloidal silica-containing organosilicon-based resin as disclosed in Japanese Examined Patent Application, Second Publication No. H4-55615. The thickness (actual thickness) of the hard coating layer 6 can be about 2 $\mu$m to about 4 $\mu$m.

The hard coating layer 6 can be formed with a predetermined thickness on the primer layer 5 on the plastic base 2 by dipping the plastic base 2 having the primer layer 5 formed thereon in a liquid for forming the hard coating layer 6 and then lifting and drying the plastic base 2. As the liquid for forming the hard coating layer 6, for example, a liquid in which a resin to be the hard coating layer 6 and an inorganic oxide particulate sol are dispersed or dissolved in water or an alcohol-based solvent and mixed therewith can be used.

When the refractive index of the functional thin film 4 including the primer layer 5 and the hard coating layer 6 is substantially the same as the refractive index of the plastic base 2, it is possible to suppress a reduction in transmissivity and the occurrence of interference fringes which are caused by the reflection at an interface between the functional thin film 4 and the plastic base 2. Accordingly, the refractive index of the functional thin film 4 is adjusted in accordance with the refractive index of the plastic base 2. The adjustment of the refractive index of the functional thin film 4 (primer layer 5 and hard coating layer 6) can be performed by selecting the type (physical properties) of resin which is a main component of the functional thin film 4, by selecting the type (physical properties) of particulates added to the resin which is a main component, or the like.

In the present embodiment, the functional thin film 4 is formed to include the primer layer 5 and the hard coating layer 6. However, for example, any one or both of the primer layer 5 and the hard coating layer 6 may be omitted. In addition, as a constituent film of the functional thin film 4, for example, a dielectric film made of indium tin oxide (ITO) or the like, or a metallic film may be disposed in addition to the primer layer 5 and the hard coating layer 6.

In addition, in the present embodiment, a dielectric film or a metallic film having a thickness of 20 nm or less may be disposed between a high refractive index inorganic material and a low refractive index inorganic material constituting the inorganic multilayer film. The thickness of the dielectric film or the metallic film may be 10 nm or less.

The inorganic multilayer film 3 has a double-layer configuration, which has a high refractive index layer 7 having a multilayer structure in which a high refractive index inorganic material and a low refractive index inorganic material are alternately applied in multilayers on the plastic base 2 and has a low refractive index layer 8 made of a low refractive index inorganic material having a lower refractive index than the refractive index of the high refractive index layer 7 on the high refractive index layer 7. The inorganic multilayer film 3 has a function as an antireflection film that prevents reflection of incident light.

In addition, in the present embodiment, an inorganic multilayer film is used as a multilayer film. However, an organic multilayer film may be used as long as the advantageous effect of the present invention is not impaired.

In the present embodiment, the high refractive index layer 7 is formed of a first layer 9 made of a high refractive index inorganic material which is provided close to the plastic base 2, a second layer 10 made of a low refractive index

inorganic material which is provided on the first layer 9, and a third layer 11 made of a high refractive index inorganic material which is provided on the second layer 10.

The first layer 9 is provided in contact with the hard coating layer 6 and is made of zirconium dioxide ($ZrO_2$) having a refractive index of 2.0. Other than $ZrO_2$ for example, titanium dioxide ($TiO_2$ and tantalum dioxide ($Ta_2O_5$) can be used as the high refractive index inorganic material constituting the first layer 9. Furthermore, the first layer 9 can also be formed of oxide of an alloy including several elements selected from zirconium, titanium, and tantalum. In addition to these, for example, aluminum oxide ($Al_2O_3$), yttrium dioxide ($Y_2O_3$), hafnium dioxide ($HfO_2$), and niobium dioxide ($Nb_2O_5$) can also be used.

Here, in this manner, when the first layer 9 is formed of a high refractive index inorganic material ($ZrO_2$) the adhesion between the first layer 9 and the hard coating layer 6 can be obtained. That is, this is because the adhesion (adhesion power) between the layer ($ZrO_2$) made of a high refractive index inorganic material and the hard coating layer 6 is greater than the adhesion (adhesion power) between the layer ($SiO_2$) made of a low refractive index inorganic material and the hard coating layer 6. In addition, even when the functional thin film 4 (primer layer 5 and hard coating layer 6) is omitted, the adhesion (adhesion power) between the high refractive index layer ($ZrO_2$) and the plastic base 2 is greater than the adhesion (adhesion power) between the low refractive index layer ($SiO_2$) and the plastic base 2, and thus using a high refractive index inorganic material is further advantageous regarding adhesion.

The second layer 10 is provided in contact with the first layer 9 and is made of silicon dioxide ($SiO_2$) having a refractive index of 1.47. Other than $SiO_2$, for example, $MgF_2$ having a refractive index of 1.36 can be used as the low refractive index inorganic material constituting the second layer 10.

The third layer 11 is provided in contact with the second layer 10 and is made of zirconium dioxide ($ZrO_2$) as in the first layer 9. As in the first layer 9, the third layer 11 can be formed by a high refractive index inorganic material other than $ZrO_2$.

In addition, the high refractive index layer 7 can be formed so as not to have a three-layer structure of the first layer 9, the second layer 10, and the third layer 11 as described above, but to be configured in two layers or in four or more layers if the above-described reflectivity condition is satisfied.

The low refractive index layer 8 is provided in contact with the third layer 11 and is made of silicon dioxide ($SiO_2$) as in the second layer 10.

In addition, in the present embodiment, on the inorganic multilayer film 3, that is, on the outermost layer (low refractive index layer 8) of the inorganic multilayer film 3 which is the farthest from the plastic base 2, a water-and-oil repellent film 12 including a fluorine-substituted alkyl group-containing organosilicon compound is provided.

The water-and-oil repellent film 12 contains the fluorine-substituted alkyl group-containing organosilicon compound as a main component, and has liquid repellency (water repellency and oil repellency). That is, the water-and-oil repellent film 12 reduces the surface energy of the optical component to exhibit a function of preventing water marks and preventing contamination, and improves the sliding property of the surface of the optical component. As a result, abrasion resistance can be improved.

As the fluorine-substituted alkyl group-containing organosilicon compound, one of the following general formulas (1) to (6) is selected:

[Chem. 1]

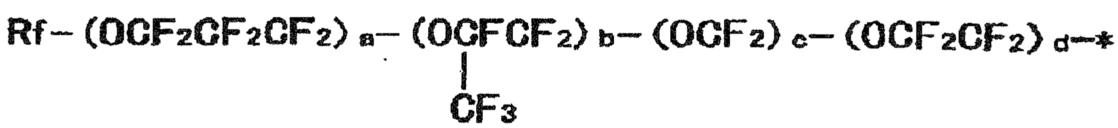

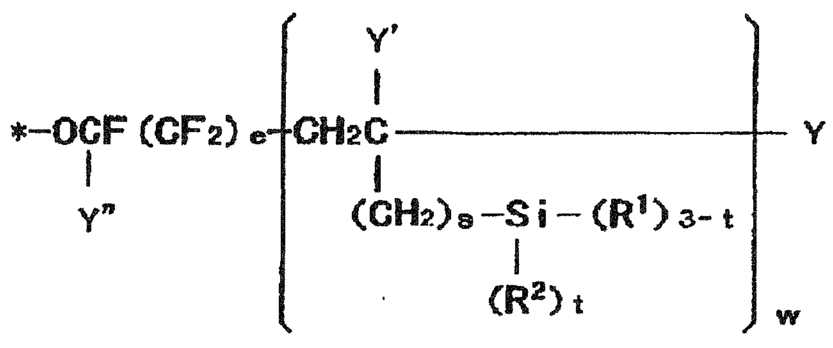

• • • (1)

(in the formula (1), Rf represents a straight or branched perfluoroalkyl group with 1 to 16 carbon atoms, Y represents iodine or hydrogen, Y' represents hydrogen or a lower alkyl group with 1 to 5 carbon atoms, Y" represents fluorine or a trifluoromethyl group, $R^1$ represents a hydrolyzable group, $R^2$ represents hydrogen or an inert monovalent organic group, a, b, c, and d each represents an integer of 0 to 200, e represents 0 or 1, s and t each represents an integer of 0 to 2, and w represents an integer of 1 to 10);

[Chem. 2]

$$F\text{- }(CF_2)_q\text{-}(OC_3F_6)_m\text{-}(OC_2F_4)_m\text{-}(OCF_2)_o(CH_2)_pXX''Si\ (X')_{3\text{-}k}(R^3)_k \qquad (2)$$

[Chem. 3]

$$F\text{-}(CF_2)_q\text{-}(OC_3F_6)_m\text{-}(OC_2F_4)_n\text{-}OCF_2)_o(CH_2)_pXX''(X')_{2\text{-}k}(R^3)_kSiO(F\text{-}(CF_2)_q\text{-}(OC_3F_6)_m\text{-}(OC_2F_4)_n\text{-}(OCF_2)_o(CH_2)_pXX''(X')_{1\text{-}k}(R^3)_kSiO)_zF\text{-}(CF_2)_q\text{-}(OC_3F_6)_m\text{-}(OC_2F_4)_n\text{-}(OCF_2)_o(CH_2)_pXX''(X')_{2\text{-}k}(R^3)_kSi \qquad (3)$$

[Chem. 4]

$$F\text{-}(CF_2)_q\text{-}(OC_3F_6)_m\text{-}(OC_2F_4)_n\text{-}(OCF_2)_o(CH_2)_pX(CH_2)_rSi(X')_{3\text{-}k}(R^3)_k \qquad (4)$$

[Chem. 5]

$$F\text{-}(CF_2)_q\text{-}(OC_3F_6)_m\text{-}(OC_2F_4)_n\text{-}(OCF_2)_o(CH_2)_pX(CH_2)_r(X')_{2\text{-}k}(R^3)_kSiO(F\text{-}(CF_2)_q\text{-}(OC_3F_6)_m\text{-}(OC_2F_4)_n\text{-}(OCF_2)_o(CH_2)_pX(CH_2)_r(X')_{1\text{-}k}(R^3)_kSiO)_zF\text{-}(CF_2)_q\text{-}(OC_3F_6)_m\text{-}(OC_2F_4)_n\text{-}(OCF_2)_o(CH_2)_pX(CH_2)_r\ (X')_{2\text{-}k}(R^3)_kSi \qquad (5)$$

(in the formulas (2) to (5), X represents oxygen or a divalent organic group, X' represents a hydrolyzable group, X" represents a divalent organosilicon group, $R^3$ represents a straight or branched alkylene group with 1 to 22 carbon atoms, q represents an integer of 1 to 3, m, n, and o each represents an integer of 0 to 200, p represents 1 or 2, r represents an integer of 2 to 20, k represents an integer of 0 to 2, and z represents an integer of 0 to 10 when k is 0 or 1); and

[Chem. 6]

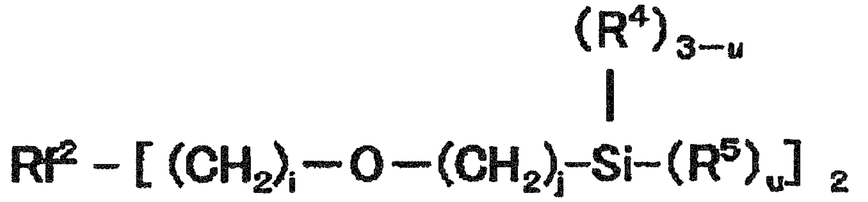

···(6)

(in the formula (6), $Rf^2$ represents a divalent straight perfluoropolyether group, $R^4$ represents a phenyl group or an alkyl group with 1 to 4 carbon atoms, $R^5$ represents a hydrolyzable group, i represents an integer of 0 to 2, j represents an integer of 1 to 5, and u represents 2 or 3).

Here, in order to give excellent durability to the water-and-oil repellent film 12, the fluorine-substituted alkyl group-containing organosilicon compound selected from the general formulas (1) to (5) and the fluorine-substituted alkyl group-containing organosilicon compound selected from the general formula (6) can be combined and used.

As the fluorine-substituted alkyl group-containing organosilicon compound shown in the general formulas (1) to (5), Optool DSX and Optool AES4 manufactured by Daikin Industries, Ltd., and the like can be used. In addition, as the fluorine-substituted alkyl group-containing organosilicon compound shown in the general formula (6), KY-130 and KY-164 manufactured by Shin-Etsu Chemical Co., Ltd., and the like can be used.

The optical component 1 further includes an inorganic multilayer film 3' disposed on a second surface of the plastic base 2. Similarly to the first surface, a functional thin film 4 is disposed between the second surface of the plastic base 2 and the inorganic multilayer film 3'.

The inorganic multilayer film 3' has a double-layer configuration which has a high refractive index layer 7' having a multilayer structure in which a high refractive index inorganic material and a low refractive index inorganic material are alternately applied in multilayers on the plastic base 2, and has a low refractive index layer 8' made of a low refractive index inorganic material having a lower refractive index than the refractive index of the high refractive index layer 7' on the high refractive index layer 7'.

In the present embodiment, the high refractive index layer 7' is formed of a first layer 9' made of a high refractive index inorganic material which is provided close to the plastic base 2, a second layer 10' made of a low refractive index inorganic material which is provided on the first layer 9', and a third layer 11' made of a high refractive index inorganic material which is provided on the second layer 10'.

In the present embodiment, examples of the inorganic materials which are used in the first layer 9', the second layer 10', and the third layer 11' include the same materials as the inorganic materials which are used in the first layer 9, the second layer 10, and the third layer 11 in the first embodiment.

Like the high refractive index layer 7 in the first embodiment, the high refractive index layer 7' can be formed not to have a three-layer structure, but to be formed of two layers or four or more layers.

In the present embodiment, the functional thin film 4 is formed to include the primer layer 5 and the hard coating layer 6. However, similarly to the first surface, for example, any one or both of the primer layer 5 and the hard coating layer 6 may be omitted. In addition, as a constituent film of the functional thin film 4, for example, a dielectric film made of indium tin oxide (ITO) or the like, or a metallic film may be added to the primer layer 5 and the hard coating layer 6.

In addition, in the present embodiment, a dielectric film or a metallic film having a thickness of 20 nm or less may be disposed between a high refractive index inorganic material and a low refractive index inorganic material constituting the inorganic multilayer film. The thickness of the dielectric film or the metallic film may be 10 nm or less.

In addition, in the present embodiment, an inorganic multilayer film is used as a multilayer film. However, an organic multilayer film may be used as long as the advantageous effect of the present invention is not impaired.

In the present embodiment, any of both surfaces of the plastic base may be a front surface and may be a rear surface. Specifically, for example, the first surface can be the front surface, and the second surface can be the rear surface.

FIG. 2 represents a spectral characteristics curve showing a relationship between light wavelength and reflectivity at the light wavelength of the inorganic multilayer film 3 (multilayer film provided on the first surface) or the inorganic multilayer film 3' (multilayer film provided on the second surface).

In the present embodiment, a spectral characteristics curve O1 indicating a relationship between wavelength range and reflectivity of the inorganic multilayer film 3 in the wavelength range has one (reflectivity) local maximum (in FIG. 2, reflectivity at a point X1) in a wavelength range of 380 nm to 780 nm and has one (reflectivity) local minimum (in FIG. 2, reflectivity at a point X2) at a wavelength 200 nm or less longer than a wavelength (first wavelength) that corresponds to the local maximum. With respect to the point X1, for example, when effective reduction of undesirable impact of blue light is intended, the wavelength region is preferably 400 nm to 500 nm, is more preferably 410 nm to 465 nm, and is specifically preferably 430 nm to 450 nm.

Further, an average reflectivity in the wavelength range (in FIG. 2, wavelength range from a point X3 to a point X4) of a wavelength (in FIG. 2, wavelength at the point X1) that corresponds to the local maximum ± 25 nm is 50% or less, is preferably 20% or less, and is more preferably 10% or less.

In the wavelength range (in FIG. 2, wavelength range from the point X3 to the point X4) of the wavelength that corresponds to the local maximum ± 25 nm, an average reflectivity of the inorganic multilayer film 3' (multilayer film provided on the second surface) relative to an average reflectivity of the inorganic multilayer film 3 (multilayer film provided on the first surface) is 40% or less, is preferably 20% or less, and is more preferably 10% or less.

Further, a spectral characteristics curve 02 indicating a relationship between wavelength range and reflectivity of the inorganic multilayer film 3' in the wavelength range does not have a local maximum in a wavelength range (in FIG. 2, wavelength range from the point X3 to the point X4) of a wavelength that corresponds to the local maximum (in FIG. 2, reflectivity at the point X1) ± 25 nm of the spectral characteristics curve O1.

In FIG. 2, a spectral characteristics curve O1 indicating a relationship between wavelength and reflectivity of the inorganic multilayer film 3 provided on the first surface of the plastic base 2 has one local maximum (in FIG. 2, reflectivity at the point X1) at a first wavelength (in FIG. 2, wavelength at the point X1) in a wavelength range of 380 nm to 780 nm and has one local minimum (in FIG. 2, reflectivity at the point X2) at a second wavelength (in FIG. 2, wavelength at the point X2) 200 nm or less longer than the first wavelength, an average reflectivity in a wavelength range (in FIG. 2, wavelength range from the point X3 to the point X4) of the first wavelength ± 25 nm is 50% or less, an average reflectivity of the inorganic multilayer film 3' provided on the second surface of the plastic base 2 relative to the average reflectivity of the inorganic multilayer film 3 provided on the first surface is 40% or less in the wavelength range of the first wavelength ± 25 nm, and a spectral characteristics curve 02 indicating a relationship between wavelength and reflectivity of the inorganic multilayer film 3' provided on the second surface of the plastic base 2 does not have a local maximum in the wavelength range of the first wavelength ± 25 nm.

In the present embodiment, each of the inorganic multilayer film 3 and the inorganic multilayer film 3' has the above characteristics, and thereby it is possible to avoid occurrence of ghost light arising in the optical component.

Further, in the present embodiment, each of the inorganic multilayer film 3 and the inorganic multilayer film 3' can have a property that satisfies the following condition.

First, by using a spectral reflectivity $R_1(\lambda)$ [%] of a multilayer film (inorganic multilayer film 3) provided on the first surface, a spectral reflectivity $R_2(\lambda)$ [%] of a multilayer film (inorganic multilayer film 3') provided on the second

surface, and Expression (1) below, $A^n(\lambda)$ is obtained.
[Equation 5]

$$A^n(\lambda) = \left( \frac{R_2(\lambda)}{100} \times \frac{R_1(\lambda)}{100} \right)^n \quad \cdot\cdot\cdot\cdot \quad (1)$$

(in Expression (1), n represents an integer of 1 or more)

Next, by using the $R_1(\lambda)$, the $R_2(\lambda)$, the $A^n(\lambda)$, an optical absorptivity $F(\lambda)$ [%] by the plastic base 2, and Expression (2) below, a spectral characteristic $T_{gn}(\lambda)$ [%] of ghost light due to multiple reflection in an optical component is obtained.
[Equation 6]

$$T_{gn}(\lambda) = \sum_{n=1}^{\infty} \frac{100 - R_1(\lambda)}{100} \times \frac{100 - R_2(\lambda)}{100} \times A^n(\lambda) \times F^{2n+1}(\lambda) \quad \cdot\cdot\cdot\cdot \quad (2)$$

(in Expression (2), n represents an integer of 1 or more)

Next, by using a relative spectral intensity $S(\lambda)$ of a standard light source (D65), a color matching function $x(\lambda)y(\lambda)z(\lambda)$, and Expression (3) below in accordance with JIS8701 using the $T_{gn}(\lambda)$, K is obtained.
[Equation 7]

$$K = \frac{100}{\int_{380}^{780} S(\lambda)\bar{y}(\lambda)d\lambda} \quad \cdot\cdot\cdot\cdot \quad (3)$$

Next, by using the K, the $S(\lambda)$, the color matching function $x(\lambda)y(\lambda)z(\lambda)$, the $T_{gn}(\lambda)$, and Expression (4) below, a Y value of tristimulus values XYZ is obtained.
[Equation 8]

$$Y = K \int_{380}^{780} S(\lambda)\bar{y}(\lambda)T_{gn}(\lambda)d\lambda \quad \cdot\cdot\cdot\cdot \quad (4)$$

In the present embodiment, for example, the inorganic multilayer film 3 and the inorganic multilayer film 3' are configured such that each of the films has a Y value of $2.0 \times 10^{-2}$ or less. Each of the inorganic multilayer film 3 and the inorganic multilayer film 3' has such a Y value, and thereby it is possible to further effectively avoid occurrence of ghost light arising in the optical component.

[Manufacturing Method of Optical Component]

Next, an embodiment of a method of manufacturing the optical component according to the present invention will be described based on the embodiment of the optical component 1.

The manufacturing method in the present embodiment includes a step of forming the functional thin film 4 (primer layer 5 and hard coating layer 6) on the plastic base 2 by a method which is the same as in the conventional case, a step of heating the plastic base 2, a step of forming one of the inorganic multilayer film 3 and the inorganic multilayer film 3' on each of a first surface and a second surface, the first surface and the second surface constituting both surfaces of the plastic base 2, after adjusting the temperature of the plastic base 2 to a predetermined temperature (for example, 70 degrees Celsius) by the heating, and a step of forming the water-and-oil repellent film 12 on the inorganic multilayer film 3 and the inorganic multilayer film 3'.

The step of forming each of the inorganic multilayer film 3 and the inorganic multilayer film 3' has a process of forming the high refractive index layer 7 (7') having a multilayer structure by alternately applying a high refractive index inorganic material and a low refractive index inorganic material in multilayers, and a process of forming, on the high refractive index layer 7 (7'), the low refractive index layer 8 (8') made of a low refractive index inorganic material. For example, a vacuum deposition method can be used to form the layers.

FIG. 3 is a diagram showing an example of a deposition apparatus (film formation apparatus) 30 for forming the layers of the inorganic multilayer film 3. As shown in FIG. 3, the deposition apparatus 30 includes a first film formation chamber 31, a second film formation chamber 32, and a third film formation chamber 33. The first film formation chamber

31, the second film formation chamber 32, and the third film formation chamber 33 are configured such that the inside of each is decompressed substantially to a vacuum and is held in that state. In addition, in the deposition apparatus 30, the internal temperature of each of the first film formation chamber 31, the second film formation chamber 32, and the third film formation chamber 33 is adjustable using a temperature control unit (not shown in the drawing).

The deposition apparatus 30 is provided with a holding member 34 in the internal space of each of the first film formation chamber 31, the second film formation chamber 32, and the third film formation chamber 33. The holding member 34 has a curved upper surface (holding surface) and is configured to be rotatable. The holding member 34 is configured to hold a plurality of plastic bases 2 on the upper surface thereof.

A deposition source 35 of the deposition apparatus 30 is disposed in a space inside of the second film formation chamber 32. The deposition source 35 includes a first deposition source 35A and a second deposition source 35B. In addition, a light source device 36 which is capable of irradiating the deposition source 35 with beams is disposed in the second film formation chamber 32. The light source device 36 can irradiate the deposition source 35 with electrons and sputter constituent particles of the deposition source 35.

The deposition source 35 is irradiated with the electrons emitted from the light source device 36, and thereby a material (gas) for forming the inorganic multilayer film 3 and the inorganic multilayer film 3' is ejected from the deposition source 35.

For example, the light source device 36 irradiates the first deposition source 35A with beams, and thereby $ZrO_2$ vapor is ejected from the first deposition source 35A and supplied to be deposited onto the plastic base 2 which is held on the holding member 34. Accordingly, the first layer 9 (9') and the third layer 11 (11') in the high refractive index layer 7 (7') of each of the inorganic multilayer film 3 and the inorganic multilayer film 3' can be formed. Similarly, by irradiating the second deposition source 35B with beams, $SiO_2$ vapor is ejected from the second deposition source 35B and supplied to be deposited onto the plastic base 2 which is held on the holding member 34. Accordingly, the second layer 10 (10') in the high refractive index layer 7 (7') of each of the inorganic multilayer film 3 and the inorganic multilayer film 3', and the low refractive index layer 8 (8') can be formed.

That is, by alternately performing the irradiation of the first deposition source 35A with beams and the irradiation of the second deposition source 35B with beams, a layer made of a high refractive index inorganic material and a layer made of a low refractive index inorganic material can be alternately formed and applied on the plastic base 2 which is held on the holding member 34.

The optical component according to the embodiment of the present invention is designed such that a spectral characteristics curve indicating a relationship between wavelength range and reflectivity of the multilayer film (inorganic multilayer film 3) provided on the first surface of the plastic base 2 in the wavelength range has one local maximum in a wavelength range of 380 nm to 780 nm and has one local minimum at a second wavelength 200 nm or less longer than a wavelength (first wavelength) that corresponds to the local maximum, an average reflectivity of the multilayer film provided on the first surface of the plastic base 2 in a wavelength range of the wavelength that corresponds to the local maximum ± 25 nm is 50% or less, an average reflectivity of the multilayer film (inorganic multilayer film 3') provided on the second surface of the plastic base 2 relative to the average reflectivity of the multilayer film provided on the first surface is 40% or less in the wavelength range of the wavelength (first wavelength) that corresponds to the local maximum ± 25 nm, and a spectral characteristics curve indicating a relationship between wavelength range and reflectivity of the multilayer film provided on the second surface of the plastic base 2 in the wavelength range does not have a local maximum in the wavelength range of the wavelength that corresponds to the local maximum ± 25 nm.

A deposition source made of zirconium oxide (ZrO) may be used as the first deposition source 35A, and the first deposition source 35A may be irradiated with beams while introducing oxygen to the internal space of the second film formation chamber 32 to form a high refractive index inorganic material layer made of zirconium dioxide ($ZrO_2$).

In addition, in the method of manufacturing the optical component according to the present embodiment, the step of forming each of the inorganic multilayer film 3 and the inorganic multilayer film 3' may include a step of performing ion beam assisted film formation to form at least one layer of the layers constituting each of the inorganic multilayer film 3 and the inorganic multilayer film 3'. The method of manufacturing the optical component according to the present embodiment includes such a step, and thereby a dielectric film is disposed between the high refractive index inorganic material and the low refractive index inorganic material constituting the inorganic multilayer film.

FIG. 4 is a diagram showing an example of a film formation apparatus 30' used to apply ion beam assisting. The film formation apparatus 30' is provided with an ion gun 37 in the second film formation chamber of the deposition apparatus 30 shown in FIG. 3. In FIG. 4, the same constituent elements as in the deposition apparatus 30 shown in FIG. 3 will be denoted by the same reference numerals, and descriptions thereof will be omitted here.

In the present embodiment, when a dielectric film of ITO or the like is disposed between the high refractive index layer 7 (7') and the low refractive index layer 8 (8') constituting each of the inorganic multilayer film 3 and the inorganic multilayer film 3', ion beam assisted film formation is performed.

Note that, at least one layer of the layers constituting the inorganic multilayer film 3 may be formed by ion beam assisted film formation in the second film formation chamber 32, and the layer formed by ion beam assisted film formation

is not limited to a dielectric film.

In the present embodiment, the second film formation chamber of the film formation apparatus 30' is configured by a holding member 34 to hold a base having a high refractive index layer 7 (7') formed on the plastic base 2, a deposition source 35', an ion gun 37 disposed away from the deposition source 35', and a light source device 36, as main constituents.

In addition, the film formation apparatus 30' is configured such that the inside of the film formation apparatus 30' can be decompressed substantially to vacuum and that the area surrounding the plastic base 2 can be held in a vacuum atmosphere. Moreover, an atmosphere gas supply source such as a gas cylinder is connected to the film formation apparatus 30', and the film formation apparatus 30' is configured such that the inside of the vacuum vessel can be made to be in a low-pressure state such as vacuum and in an inert gas atmosphere of an oxygen gas, an argon gas, or the like or an inert gas atmosphere including oxygen.

The deposition source 35' includes, for example, ITO. The light source device 36 irradiates the deposition source 35' with beams, and thereby gasified ITO is ejected from the deposition source 35' and is supplied to the plastic base 2 which is held on the holding member 34. Thus, a dielectric film made of ITO can be formed on the high refractive index layer 7 (7').

An ion gun 37 is disposed inside of the second film formation chamber 32 and includes a gas introduction unit used to introduce a gas to be ionized and an extraction electrode provided at the front. The ion gun 37 is a device configured to ionize part of gas atoms or gas molecules, control the ionized particles as ion beams by an electric field which is produced by the extraction electrode, and irradiate a sample with the ion beams.

The light source device 36 has a configuration similar to that of the ion gun 37, and is capable of irradiating the deposition source 35' with electrons to sputter constituent particles of the deposition source 35'. Note that, since it is important that the film formation apparatus 30' is capable of sputtering the constituent particles of the deposition source 35', the film formation apparatus 30' may be configured to be capable of applying a voltage to the deposition source 35' using a high-frequency coil or the like to sputter the constituent particles of the deposition source 35', and the light source device 36 may be omitted.

Next, a case in which a dielectric film of ITO is formed onto a high refractive index layer 7 (7') on the plastic base 2 using the film formation apparatus 30' having the above configuration will be described. When a dielectric film of ITO is formed, a deposition source 35' of ITO is used, and a configuration is used in which an upper surface of the holding member 34 can be irradiated with ions emitted from the ion gun 37. Next, the inside of the film formation chamber 32 which stores the plastic base 2 is evacuated to be in a decompressed atmosphere. Then, the ion gun 37 and the light source device 36 are operated.

When the light source device 36 irradiates the deposition source 35' with electrons, the constituent particles of the deposition source 35' are sputtered, and fly to arrive on the high refractive index layer 7 (7'). Then, the constituent particles sputtered from the deposition source 35' are deposited on the high refractive index layer 7 (7'), and at the same time, the ion gun 37 irradiates the high refractive index layer 7 (7') with argon ions as the ion beams.

In the present embodiment, the ion beam assisting is performed using at least one of gases selected from an inert gas, an oxygen gas, and a mixed gas of an inert gas and an oxygen gas. For example, argon can be used as the inert gas.

When each of the inorganic multilayer film 3 and the inorganic multilayer film 3' is formed in this manner, the water-and-oil repellent film 12 is formed on the inorganic multilayer film 3 (3').

Examples of the method of forming the water-and-oil repellent film 12 include wet methods such as a dipping method, a spin-coating method and a spray method, and dry methods such as a vacuum deposition method.

Generally, a dipping method is frequently used from among the wet methods. This method is a method in which an optical component with layers up to the inorganic multilayer film 3 (3') formed thereon is dipped in a liquid in which a fluorine-substituted alkyl group-containing organosilicon compound is dissolved in an organic solvent, and is lifted under a predetermined condition to be dried to thereby form a film.

As the organic solvent, perfluorohexane, perfluoro-4-methoxybutane, perfluoro-4-ethoxybutane, m-xylene hexafluoride, or the like is used.

The dilute concentration achieved using the organic solvent can be 0.01 wt % to 0.5 wt %, and is preferably 0.03 wt % to 0.1 wt %. When the concentration is too low, the water-and-oil repellent film 12 having a sufficient film thickness may not be obtained. In addition, when the concentration is too high, uneven coating may easily occur and material costs may also increase.

A vacuum deposition method is frequently used from among dry methods. This method is a method in which a fluorine-substituted alkyl group-containing organosilicon compound is heated and evaporated in a vacuum chamber to form the water-and-oil repellent film 12.

In the optical component 1 formed in this manner, the inorganic multilayer film 3 and the inorganic multilayer film 3' are designed such that each of the films has the above characteristics, and therefore it is possible to avoid occurrence of ghost light arising in the optical component.

In addition, according to the method of manufacturing the optical component, such an excellent optical component with good balance can be securely provided.

[Method of Quantifying Ghost Light]

Next, based on the above description of the optical component 1, a method of quantifying ghost light of the present embodiment is described.

A method of quantifying ghost light according to the present embodiment is a method of quantifying ghost light arising from multiple reflection of light in an optical component that is provided with a plastic base 2 and a multilayer film provided on each of both surfaces including a first surface and a second surface of the plastic base 2, the method including: obtaining $A^n(\lambda)$ from a spectral reflectivity $R_1(\lambda)$ [%] of a multilayer film provided on the first surface, a spectral reflectivity $R_2(\lambda)$ [%] of a multilayer film provided on the second surface, and Expression (1) below
[Equation 9]

$$A^n(\lambda) = \left( \frac{R_2(\lambda)}{100} \times \frac{R_1(\lambda)}{100} \right)^n \quad \cdots\cdots \quad (1)$$

(in Expression (1), n represents an integer of 1 or more);
obtaining a spectral characteristic $T_{gn}(\lambda)$ [%] of ghost light due to multiple reflection in an optical component from the $R_1(\lambda)$, the $R_2(\lambda)$, the $A^n(\lambda)$, an optical absorptivity $F(\lambda)$ [%] by the plastic base, and Expression (2) below
[Equation 10]

$$T_{gn}(\lambda) = \sum_{n=1}^{\infty} \frac{100 - R_1(\lambda)}{100} \times \frac{100 - R_2(\lambda)}{100} \times A^n(\lambda) \times F^{2n+1}(\lambda) \quad \cdots\cdots \quad (2)$$

(in Expression (2), n represents an integer of 1 or more);

obtaining K from a relative spectral intensity $S(\lambda)$ of a standard light source (D65), a color matching function $x(\lambda)y(\lambda)z(\lambda)$, and Expression (3) below in accordance with JIS8701 by using the $T_{gn}(\lambda)$;
[Equation 11]

$$K = \frac{100}{\int_{380}^{780} S(\lambda)\bar{y}(\lambda)d\lambda} \quad \cdots\cdots \quad (3)$$

obtaining a Y value of tristimulus values XYZ from the K, the $S(\lambda)$, the color matching function $x(\lambda)y(\lambda)z(\lambda)$, the $T_{gn}(\lambda)$, and Expression (4) below; and
[Equation 12]

$$Y = K \int_{380}^{780} S(\lambda)\bar{y}(\lambda)T_{gn}(\lambda)d\lambda \quad \cdots\cdots \quad (4)$$

setting the obtained Y value as the intensity of ghost light. As described above, the inventors have found a method of quantifying the intensity of ghost light arising in an optical component. By using the method according to the embodiment of the present invention, and by setting as a basis of a multilayer film provided on an optical component, for example, the Y value to be $2.0 \times 10^{-2}$ or less, it is possible to manufacture an optical component superior for a reduction of ghost light.

## EXAMPLES

Hereinafter, examples of the embodiments of the present invention will be described in more detail, but the present invention is not limited to the following examples.

«Test 1»

On a urethane-based synthetic resin substrate, a silicon-based hard coating having a refractive index of 1.67

and a primer coating having a refractive index of 1.67 were prepared by thermal curing, and film formation was performed by a vacuum deposition method as follows.

<Example 1>

First Surface: A lens was set in a rotating dome provided in a vacuum chamber, the temperature in the vacuum chamber was adjusted to 70 degrees Celsius by heating, air was exhausted until the pressure was adjusted to $1.0\times10^{-3}$ Pa, and Ar ion beam cleaning was carried out for 60 seconds under conditions of an acceleration voltage of 500 V and an acceleration current of 100 mA. Then, a first layer $ZrO_2$ (refractive index: 2.00) having an optical film thickness of 0.110λ, a second layer $SiO_2$ (refractive index: 1.47) having an optical film thickness of 0.130λ, a third layer $ZrO_2$ (refractive index: 2.00) having an optical film thickness of 0.160λ, a fourth layer $SiO_2$ (refractive index: 1.47) having an optical film thickness of 0.060λ, a fifth layer $ZrO_2$ (refractive index: 2.00) having an optical film thickness of 0.190λ, and a sixth layer $SiO_2$ (refractive index: 1.47) having an optical film thickness of 0.340λ were sequentially applied from the plastic base side. λ as a center wavelength of design was 500 nm.

Second Surface: Using the same apparatus as in the case of the first surface, and after pretreatment under the same processing atmosphere, a first layer $ZrO_2$ (refractive index: 2.00) having an optical film thickness of 0.050λ, a second layer $SiO_2$ (refractive index: 1.47) having an optical film thickness of 0.080λ, a third layer $ZrO_2$ (refractive index: 2.00) having an optical film thickness of 0.150λ, a fourth layer $SiO_2$ (refractive index: 1.47) having an optical film thickness of 0.040λ, a fifth layer $ZrO_2$ (refractive index: 2.00) having an optical film thickness of 0.110λ, and a sixth layer $SiO_2$ (refractive index: 1.47) having an optical film thickness of 0.220λ were sequentially applied from the plastic base side. λ as a center wavelength of design was 500 nm.

A spectral characteristic of a lens first surface of Example 1 is shown in FIG. 5A. Numerical data of the spectral characteristic of FIG. 5A is shown in FIG. 5B. A spectral characteristic of a lens second surface of Example 1 is shown in FIG. 6A. Numerical data of the spectral characteristic of FIG. 6A is shown in FIG. 6B.

<Example 2>

First Surface: A lens was set in a rotating dome provided in a vacuum chamber, the temperature in the vacuum chamber was adjusted to 70 degrees Celsius by heating, air was exhausted until the pressure was adjusted to $1.0\times10^{-3}$ Pa, and Ar ion beam cleaning was carried out for 60 seconds under conditions of an acceleration voltage of 500 V and an acceleration current of 100 mA. Then, a first layer $ZrO_2$ (refractive index: 2.00) having an optical film thickness of 0.120λ, a second layer $SiO_2$ (refractive index: 1.47) having an optical film thickness of 0.050λ, a third layer $ZrO_2$ (refractive index: 2.00) having an optical film thickness of 0.150λ, a fourth layer $SiO_2$ (refractive index: 1.47) having an optical film thickness of 0.500λ, a fifth layer $ZrO_2$ (refractive index: 2.00) having an optical film thickness of 0.170λ, a sixth layer $SiO_2$ (refractive index: 1.47) having an optical film thickness of 0.110λ, a seventh layer $ZrO_2$ (refractive index: 2.00) having an optical film thickness of 0.190λ, and an eighth layer $SiO_2$ (refractive index: 1.47) having an optical film thickness of 0.280λ were sequentially applied from the plastic base side. λ as a center wavelength of design was 500 nm.

Second Surface: Using the same apparatus as in the case of the first surface, and after pretreatment under the same processing atmosphere, a first layer $ZrO_2$ (refractive index: 2.00) having an optical film thickness of 0.110λ, a second layer $SiO_2$ (refractive index: 1.47) having an optical film thickness of 0.090λ, a third layer $ZrO_2$ (refractive index: 2.00) having an optical film thickness of 0.220λ, a fourth layer $SiO_2$ (refractive index: 1.47) having an optical film thickness of 0.060λ, a fifth layer $ZrO_2$ (refractive index: 2.00) having an optical film thickness of 0.200λ, and a sixth layer $SiO_2$ (refractive index: 1.47) having an optical film thickness of 0.330λ were sequentially applied from the plastic base side. λ as a center wavelength of design was 500 nm.

A spectral characteristic of a lens first surface of Example 2 is shown in FIG. 7A. Numerical data of the spectral characteristic of FIG. 7A is shown in FIG. 7B. A spectral characteristic of a lens second surface of Example 2 is shown in FIG. 8A. Numerical data of the spectral characteristic of FIG. 8A is shown in FIG. 8B.

<Example 3>

First Surface: A lens was set in a rotating dome provided in a vacuum chamber, the temperature in the vacuum chamber was adjusted to 70 degrees Celsius by heating, air was exhausted until the pressure was adjusted to $1.0\times10^{-3}$ Pa, and Ar ion beam cleaning was carried out for 60 seconds under conditions of an acceleration voltage of 500 V and an acceleration current of 100 mA. Then, a first layer $ZrO_2$ (refractive index: 2.00) having an optical film thickness of 0.100λ, a second layer $SiO_2$ (refractive index: 1.47) having an optical film thickness of 0.100λ, a third layer $ZrO_2$ (refractive index: 2.00) having an optical film thickness of 0.200λ, a fourth layer $SiO_2$ (refractive index: 1.47) having an optical film thickness of 0.060λ, a fifth layer $ZrO_2$ (refractive index: 2.00) having an optical film thickness of 0.160λ, and a sixth layer $SiO_2$ (refractive index: 1.47) having an optical film thickness of 0.340λ were sequentially applied from the plastic base

side. λ as a center wavelength of design was 500 nm.

Second Surface: Using the same apparatus as in the case of the first surface, and after pretreatment under the same processing atmosphere, a first layer $ZrO_2$ (refractive index: 2.00) having an optical film thickness of 0.070λ, a second layer $SiO_2$ (refractive index: 1.47) having an optical film thickness of 0.070k, a third layer $ZrO_2$ (refractive index: 2.00) having an optical film thickness of 0.140λ, a fourth layer $SiO_2$ (refractive index: 1.47) having an optical film thickness of 0.050λ, a fifth layer $ZrO_2$ (refractive index: 2.00) having an optical film thickness of 0.120λ, and a sixth layer $SiO_2$ (refractive index: 1.47) having an optical film thickness of 0.290λ were sequentially applied from the plastic base side. λ as a center wavelength of design was 500 nm.

A spectral characteristic of a lens first surface of Example 3 is shown in FIG. 9A. Numerical data of the spectral characteristic of FIG. 9A is shown in FIG. 9B. A spectral characteristic of a second surface of Example 3 is shown in FIG. 10A. Numerical data of the spectral characteristic of FIG. 10A is shown in FIG. 10B.

<Comparative Example 1>

First Surface: A lens was set in a rotating dome provided in a vacuum chamber, the temperature in the vacuum chamber was adjusted to 70 degrees Celsius by heating, air was exhausted until the pressure was adjusted to $1.0\times10^{-3}$ Pa, and Ar ion beam cleaning was carried out for 60 seconds under conditions of an acceleration voltage of 500 V and an acceleration current of 100 mA. Then, a first layer $ZrO_2$ (refractive index: 2.00) having an optical film thickness of 0.100λ, a second layer $SiO_2$ (refractive index: 1.47) having an optical film thickness of 0.100λ, a third layer $ZrO_2$ (refractive index: 2.00) having an optical film thickness of 0.200λ, a fourth layer $SiO_2$ (refractive index: 1.47) having an optical film thickness of 0.060λ, a fifth layer $ZrO_2$ (refractive index: 2.00) having an optical film thickness of 0.160λ, and a sixth layer $SiO_2$ (refractive index: 1.47) having an optical film thickness of 0.340λ were sequentially applied from the plastic base side. λ as a center wavelength of design was 500 nm.

Second Surface: Using the same apparatus as in the case of the first surface, and after pretreatment under the same processing atmosphere, a first layer $ZrO_2$ (refractive index: 2.00) having an optical film thickness of 0.100λ, a second layer $SiO_2$ (refractive index: 1.47) having an optical film thickness of 0.100λ, a third layer $ZrO_2$ (refractive index: 2.00) having an optical film thickness of 0.200λ, a fourth layer $SiO_2$ (refractive index: 1.47) having an optical film thickness of 0.060λ, a fifth layer $ZrO_2$ (refractive index: 2.00) having an optical film thickness of 0.160λ, and a sixth layer $SiO_2$ (refractive index: 1.47) having an optical film thickness of 0.340λ, were sequentially applied from the plastic base side. λ as a center wavelength of design was 500 nm.

A spectral characteristic of both lens surfaces of Comparative Example 1 is shown in FIG. 11A. Numerical data of the spectral characteristic of FIG. 11A is shown in FIG. 11B.

<Comparative Example 2>

First Surface: A lens was set in a rotating dome provided in a vacuum chamber, the temperature in the vacuum chamber was adjusted to 70 degrees Celsius by heating, air was exhausted until the pressure was adjusted to $1.0\times10^{-3}$ Pa, and Ar ion beam cleaning was carried out for 60 seconds under conditions of an acceleration voltage of 500 V and an acceleration current of 100 mA. Then, a first layer $ZrO_2$ (refractive index: 2.00) having an optical film thickness of 0.150λ, a second layer $SiO_2$ (refractive index: 1.47) having an optical film thickness of 0.050λ, a third layer $ZrO_2$ (refractive index: 2.00) having an optical film thickness of 0.170λ, a fourth layer $SiO_2$ (refractive index: 1.47) having an optical film thickness of 0.550λ, a fifth layer $ZrO_2$ (refractive index: 2.00) having an optical film thickness of 0.160λ, a sixth layer $SiO_2$ (refractive index: 1.47) having an optical film thickness of 0.090λ, a seventh layer $ZrO_2$ (refractive index: 2.00) having an optical film thickness of 0.200λ, and an eighth layer $SiO_2$ (refractive index: 1.47) having an optical film thickness of 0.310λ were sequentially applied from the plastic base side. λ as a center wavelength of design was 500 nm.

Second Surface: Using the same apparatus as in the case of the first surface, and after pretreatment under the same processing atmosphere, a first layer $ZrO_2$ (refractive index: 2.00) having an optical film thickness of 0.150λ, a second layer $SiO_2$ (refractive index: 1.47) having an optical film thickness of 0.050λ, a third layer $ZrO_2$ (refractive index: 2.00) having an optical film thickness of 0.170λ, a fourth layer $SiO_2$ (refractive index: 1.47) having an optical film thickness of 0.550λ, a fifth layer $ZrO_2$ (refractive index: 2.00) having an optical film thickness of 0.160λ, a sixth layer $SiO_2$ (refractive index: 1.47) having an optical film thickness of 0.090λ, a seventh layer $ZrO_2$ (refractive index: 2.00) having an optical film thickness of 0.200λ, and an eighth layer $SiO_2$ (refractive index: 1.47) having an optical film thickness of 0.310λ were sequentially applied from the plastic base side. λ as a center wavelength of design was 500 nm.

A spectral characteristic of both lens surfaces of Comparative Example 2 is shown in FIG. 12A. Numerical data of the spectral characteristic of FIG. 12A is shown in FIG. 12B.

The formed layers in Examples 1 to 3 and Comparative Examples 1 to 2 are shown in detail in Tables 1 to 2.

[Table 1]

| | Example 1 | | | | | | Example 2 | | | | | | Example 3 | | | | | |
|---|---|---|---|---|---|---|---|---|---|---|---|---|---|---|---|---|---|---|
| | First Surface | | | Second Surface | | | First Surface | | | Second Surface | | | First Surface | | | Second Surface | | |
| | Material | Optical Film Thickness | Physical Film Thickness | Material | Optical Film Thickness | Physical Film Thickness | Material | Opticcal Film Thickness | Physical Film Thickness | Material | Opticcal Film Thickness | Physical Film Thickness | Material | Opticcal Film Thickness | Physical Film Thickness | Material | Optical Film Thickness | Physical Film Thickness |
| First Layer | $ZrO_2$ | 0.110 | 27 | $ZrO_2$ | 0.050 | 12 | $ZrO_2$ | 0.120 | 30 | $ZrO_2$ | 0.110 | 27 | $ZrO_2$ | 0.100 | 25 | $ZrO_2$ | 0.070 | 18 |
| Second Layer | $SiO_2$ | 0.130 | 44 | $SiO_2$ | 0.080 | 27 | $SiO_2$ | 0.050 | 17 | SiO2 | 0.090 | 31 | SiO2 | 0.100 | 34 | SiO2 | 0.070 | 22 |
| Third Layer | $ZrO_2$ | 0.180 | 40 | $ZrO_2$ | 0.150 | 38 | $ZrO_2$ | 0.150 | 38 | ZrO2 | 0.220 | 55 | ZrO2 | 0.200 | 50 | ZrO2 | 0.140 | 35 |
| Fourth Layer | $SiO_2$ | 0.800 | 20 | $SiO_2$ | 0.040 | 14 | $SiO_2$ | 0.500 | 170 | SiO2 | 0.060 | 20 | $SiO_2$ | 0.080 | 20 | SiO2 | 0050 | 15 |
| Fifth Layer | $ZrO_2$ | 0.190 | 47 | $ZrO_2$ | 0.110 | 28 | $ZrO_2$ | 0.170 | 43 | ZrO2 | 0.200 | 50 | ZrO2 | 0.160 | 40 | ZrO2 | 0.120 | 30 |
| Sixth Layer | $SiO_2$ | 0.340 | 115 | $SiO_2$ | 0.220 | 75 | SiO2 | 0.110 | 38 | SiO2 | 0,330 | 113 | SiO2 | 0.340 | 115 | SiO2 | 0.290 | 99 |
| Seventh Layer | | | | | | | $ZrO_2$ | 0.190 | 48 | | | | | | | | | |
| Eighth Layer | | | | | | | $SiO_2$ | 0.280 | 96 | | | | | | | | | |
| | First Surface Average Reflectivity (%) within First Surface Local Maximum ± 25 nm | | 8.4 | Second Surface Average Reflectivity (%) within First Surface Local Maximum ± 25 nm | | 0.4 | First Surface Average Reflectivity (%) within First Surface local Maximum ± 25 nm | | 8.6 | Second Surface Average Reflectivity (%) within First Surface Local Maximum ± 26 nm | | 0.9 | First Surface Average Reflectivity (%) within First Surface Local Maximum ± 25 nm | | 4.7 | Second Surface Average Reflectivity (%) withi n First Surface Local Maximum ± 25 nm | | 1.6 |

(continued)

| | Example 1 | | | | | | Example 2 | | | | | | Example 3 | | | | | |
|---|---|---|---|---|---|---|---|---|---|---|---|---|---|---|---|---|---|---|
| | First Surface | | | Second Surface | | | First Surface | | | Second Surface | | | First Surface | | | Second Surface | | |
| | Materi-al | Optical Film Thick-ness | Physical Film Thick-ness | Materi-al | Optical Film Thick-ness | Physical Film Thick-ness | Materi-al | Opticcal Film Thick-ness | Physical Film Thick-ness | Materi-al | Opticcal Film Thick-ness | Physical Film Thick-ness | Materi-al | Opticcal Film Thick-ness | Physical Film Thick-ness | Materi-al | Optical Film Thick-ness | Physical Film Thick-ness |
| | Ratio of Second Surface Average Reflectivity to First Surface Average Reflectivity in Above Wavelength Range | | | | | 4.8% | Ratio of Second Surface Average Reflectivity to First Surface Average Reflectivity in Above Wavelength Range | | | | | 10.4% | Ratio of Second Surface Average Reflectivity to First Surface Average Reflectivity in Above Wavelength Range | | | | | 34.2% |

[Table 2]

| | Comparative Example 1 | | | | | | Comparative Example 2 | | | | | |
|---|---|---|---|---|---|---|---|---|---|---|---|---|
| | First Surface | | | Second Surface | | | First Surface | | | Second Surface | | |
| | Material | Optical Film Thickness | Physical Film Thickness | Material | Opticcal Film Thickness | Physical film Thickness | Material | Optical Film Thickness | Physical Film Thickness | Material | Opticcal Film Thickness | Physical Film Thickness |
| First Layer | $ZrO_2$ | 0.100 | 25 | $ZrO_2$ | 0.100 | 25 | $ZrO_2$ | 0.150 | 376 | $ZrO_2$ | 0.150 | 376 |
| Second Layer | $SiO_2$ | 0.100 | 34 | $SiO_2$ | 0.100 | 34 | $SiO_2$ | 0.050 | 171 | $SiO_2$ | 0.050 | 171 |
| Third Layer | $ZrO_2$ | 0.200 | 50 | $ZrO_2$ | 0.200 | 50 | $ZrO_2$ | 0.170 | 414 | $ZrO_2$ | 0.170 | 414 |
| Fourth Layer | $SiO_2$ | 0.060 | 20 | $SiO_2$ | 0.060 | 20 | $SiO_2$ | 0.550 | 1860 | SiO2 | 0.550 | 1860 |
| Fifth Layer | $ZrO_2$ | 0.160 | 40 | $ZrO_2$ | 0.160 | 40 | $ZrO_2$ | 0.160 | 401 | $ZrO_2$ | 0.160 | 401 |
| Sixth Layer | $SiO_2$ | 0.340 | 115 | $SiO_2$ | 0.340 | 115 | $SiO_2$ | 0.090 | 307 | $SiO_2$ | 0.090 | 307 |
| Seventh Layer | | | | | | | $ZrO_2$ | 0.200 | 501 | $ZrO_2$ | 0.200 | 501 |
| Eighth Layer | | | | | | | $SiO_2$ | 0.310 | 1058 | $SiO_2$ | 0.310 | 1058 |
| | First Surface Average Reflectivity (%) within First Surface Local Maximum ± 25 nm | | 4.7 | Second Surface Average Reflectivity (%) within First Surface Local Maximum ± 25 nm | | 4.7 | First Surface Average Reflectivity (%) within First Surface Local Maximum ± 25 nm | | 5.0 | Second Surface Average Reflectivity (%) within First Surface Local Maximum ± 25 nm | | 5.0 |
| | Ratio of Second Surface Average Reflectivity to First Surface Average Reflectivity in Above Wavelength Range | | | | | 100% | Ratio of Second Surface Average Reflectivity to First Surface Average Reflectivity in Above Wavelength Range | | | | | 100% |

Further, in Examples 1 to 3 and Comparative Examples 1 to 2, when the spectral reflectivity of the first layer is $R_1(\lambda)$ [%], the spectral reflectivity of the second layer is $R_2(\lambda)$ [%], and the optical absorptivity by the base is $F(\lambda)$ [%], the spectral distribution of ghost light is given by
[Equation 13]

$$T_{gn}(\lambda)=\sum_{n=1}^{\infty}\frac{100-R_1(\lambda)}{100}\times\frac{100-R_2(\lambda)}{100}\times A^n(\lambda)\times F^{2n+1}(\lambda)\quad\cdots\cdots\quad(2)$$

(in Expression (2), n represents an integer of 1 or more).
Here, $A^n(\lambda)$ is given by the following Expression. In Expression (1) and Expression (2), calculation is performed as n=1.
[Equation 14]

$$A^n(\lambda)=\left(\frac{R_2(\lambda)}{100}\times\frac{R_1(\lambda)}{100}\right)^n\quad\cdots\cdots\quad(1)$$

(in Expression (1), n represents an integer of 1 or more)
Using this in accordance with JIS8701, when the relative spectral intensity of the standard light source (D65) is $S(\lambda)$ and the color matching function is $x(\lambda)y(\lambda)z(\lambda)$, the Y value of tristimulus values XYZ is calculated. Then, Y is given by
[Equation 15]

$$Y=K\int_{380}^{780}S(\lambda)\bar{y}(\lambda)T_{gn}(\lambda)d\lambda\quad\cdots\cdots\quad(4)$$

Here, K is given by the following Expression.
[Equation 16]

$$K=\frac{100}{\int_{380}^{780}S(\lambda)\bar{y}(\lambda)d\lambda}\quad\cdots\cdots\quad(3)$$

The Y value is used for quantitative comparative evaluation as the intensity of ghost light. Further, in a spectral characteristics curve, the sum of an average reflectivity of the first surface in a wavelength range of a wavelength (first wavelength) where the reflectivity of the first surface indicates an extreme value ± 25 nm and the average reflectivity of the second surface in the wavelength range was calculated. The result is shown in Table 3.

[Table 3]

| | Sum of Average Reflectivity of Both Surfaces in the Reflection Region | Y |
|---|---|---|
| Example 1 | 8.81 | 1.98E-02 |
| Example 2 | 9.50 | 1.21E-02 |
| Example 3 | 6.34 | 1.24E-02 |
| Comparative Example 1 | 9.47 | 3.28E-02 |
| Comparative Example 2 | 10.07 | 4.43E-02 |

Although substantially the same average reflectivity in the above wavelength range is maintained in Example 1 as in Comparative Example 1, the intensity of the ghost light in Example 1 was reduced by 40%. Similarly, when comparing Example 3 and Comparative Example 1, it was confirmed that the intensity of the ghost light in Example 3 was reduced by 63%. Further, when comparing Example 2 and Comparative Example 2, it was confirmed that the

intensity of the ghost light in Example 2 was reduced by 72%.

Further, the wearing evaluation was performed using the optical components.

(Wearing Evaluation)

Glasses with the optical component manufactured in accordance with Examples were worn to perform evaluation of ghost light due to fluorescent lighting. Conditions in the evaluation are as follows.

The number of Monitors: 10

Illumination: Fluorescent light (Daylight color)

Comparison of Examples 1 to 3 and Comparative Examples 1 to 2 is performed under the above conditions, and ranking from one indicating a lower intensity of ghost light was determined. The result is shown in Table 4.

[Table 4]

| Subject No. | 1 | 2 | 3 | 4 | 5 |
|---|---|---|---|---|---|
| 1 | Example 2 | Example 3 | Example 1 | Comparative Example 1 | Comparative Example 2 |
| 2 | Example 2 | Example 3 | Example 1 | Comparative Example 1 | Comparative Example 2 |
| 3 | Example 3 | Example 2 | Example 1 | Comparative Example 1 | Comparative Example 2 |
| 4 | Example 2 | Example 3 | Example 1 | Comparative Example 1 | Comparative Example 2 |
| 5 | Example 2 | Example 3 | Example 1 | Comparative Example 1 | Comparative Example 2 |
| 6 | Example 3 | Example 2 | Example 1 | Comparative Example 1 | Comparative Example 2 |
| 7 | Example 3 | Example 2 | Example 1 | Comparative Example 1 | Comparative Example 2 |
| 8 | Example 2 | Example 3 | Example 1 | Comparative Example 1 | Comparative Example 2 |
| 9 | Example 2 | Example 3 | Example 1 | Comparative Example 1 | Comparative Example 2 |
| 10 | Example 3 | Example 2 | Example 1 | Comparative Example 1 | Comparative Example 2 |

As a result of such comparative wearing evaluation, it was confirmed that even in a sensory test, the intensity of ghost light due to multiple reflection in the lens is improved with respect to Examples 1 to 3 compared to Comparative Examples 1 to 2.

The above results clearly show that according to an aspect of the present invention, it is possible to provide an optical component which has an antiglare effect, reduces feeling of fatigue, is effective for prevention of eye trouble, and is excellent in visibility while having a relatively high reflectivity; a method of manufacturing the optical component; and a method of quantifying ghost light arising from multiple reflection of light in the optical component.

DESCRIPTION OF THE REFERENCE SYMBOLS

1: OPTICAL COMPONENT
2: PLASTIC BASE
3, 3': INORGANIC MULTILAYER FILM
4: FUNCTIONAL THIN FILM
5: PRIMER LAYER (FUNCTIONAL THIN FILM)
6: HARD COATING LAYER (FUNCTIONAL THIN FILM)
7, 7': HIGH REFRACTIVE INDEX LAYER
8, 8': LOW REFRACTIVE INDEX LAYER
9, 9': FIRST LAYER
10, 10': SECOND LAYER
11, 11': THIRD LAYER
12: WATER-AND-OIL REPELLENT FILM

30: DEPOSITION APPARATUS
30': FILM FORMATION APPARATUS
31: FIRST FILM FORMATION CHAMBER
32: SECOND FILM FORMATION CHAMBER
33: THIRD FILM FORMATION CHAMBER
34: HOLDING MEMBER
35, 35': DEPOSITION SOURCE
35A: FIRST DEPOSITION SOURCE
35B: SECOND DEPOSITION SOURCE
36: LIGHT SOURCE DEVICE
37: ION GUN

## Claims

1. An optical component comprising: a plastic base; and a multilayer film provided on each of both surfaces including a first surface and a second surface of the plastic base, wherein:

   a spectral characteristics curve indicating a relationship between wavelength and reflectivity of the multilayer film provided on the first surface of the plastic base has one local maximum at a first wavelength in a wavelength range of 380 nm to 780 nm and has one local minimum at a second wavelength 200 nm or less longer than the first wavelength;
   an average reflectivity of the multilayer film provided on the first surface in a wavelength range of the first wavelength ± 25 nm is 50% or less;
   an average reflectivity of the multilayer film provided on the second surface of the plastic base relative to the average reflectivity of the multilayer film provided on the first surface is 40% or less in the wavelength range of the first wavelength ± 25 nm; and
   a spectral characteristics curve indicating a relationship between wavelength and reflectivity of the multilayer film provided on the second surface of the plastic base does not have a local maximum in the wavelength range of the first wavelength ± 25 nm.

2. The optical component according to claim 1, wherein
   in a case of: obtaining $A^n(\lambda)$ from a spectral reflectivity $R_1(\lambda)$ [%] of the multilayer film provided on the first surface, a spectral reflectivity $R_2(\lambda)$ [%] of the multilayer film provided on the second surface, and Expression (1) below
   [Equation 1]

$$A^n(\lambda) = \left( \frac{R_2(\lambda)}{100} \times \frac{R_1(\lambda)}{100} \right)^n \quad \cdots\cdots \quad (1)$$

   (in Expression (1), n represents an integer of 1 or more);
   obtaining a spectral characteristic $T_{gn}(\lambda)$ [%] of ghost light due to multiple reflection in an optical component from the $R_1(\lambda)$, the $R_2(\lambda)$, the $A^n(\lambda)$, an optical absorptivity $F(\lambda)$ [%] by the plastic base, and Expression (2) below
   [Equation 2]

$$T_{gn}(\lambda) = \sum_{n=1}^{\infty} \frac{100 - R_1(\lambda)}{100} \times \frac{100 - R_2(\lambda)}{100} \times A^n(\lambda) \times F^{2n+1}(\lambda) \quad \cdots\cdots \quad (2)$$

   (in Expression (2), n represents an integer of 1 or more);
   obtaining K from a relative spectral intensity $S(\lambda)$ of a standard light source (D65), a color matching function $x(\lambda)y(\lambda)z(\lambda)$, and Expression (3) below in accordance with JIS8701 by using the $T_{gn}(\lambda)$; and
   [Equation 3]

$$K = \frac{100}{\int_{380}^{780} S(\lambda)\bar{y}(\lambda)d\lambda} \cdots\cdots (3)$$

obtaining a Y value of tristimulus values XYZ from the K, the $S(\lambda)$, the color matching function $x(\lambda)y(\lambda)z(\lambda)$, the $T_{gn}(\lambda)$, and Expression (4) below,
[Equation 4]

$$Y = K\int_{380}^{780} S(\lambda)\bar{y}(\lambda)T_{gn}(\lambda)d\lambda \cdots\cdots (4)$$

the Y value of the multilayer film provided on each of both surfaces including the first surface and the second surface of the plastic base is $2.0 \times 10^{-2}$ or less.

**3.** The optical component according to claim 1 or 2, wherein
the plastic base is colored and has a transmissivity of 5% to 85%.

**4.** The optical component according to any one of claims 1 to 3, further comprising:

a water-and-oil repellent film including a fluorine-substituted alkyl group-containing organosilicon compound on at least one of outermost layers of the multilayer film which is the farthest from the plastic base.

**5.** The optical component according to claim 4, wherein
the fluorine-substituted alkyl group-containing organosilicon compound is one or more of fluorine-substituted alkyl group-containing organosilicon compounds selected from following general formulas (1) to (6):

[Chem. 1]

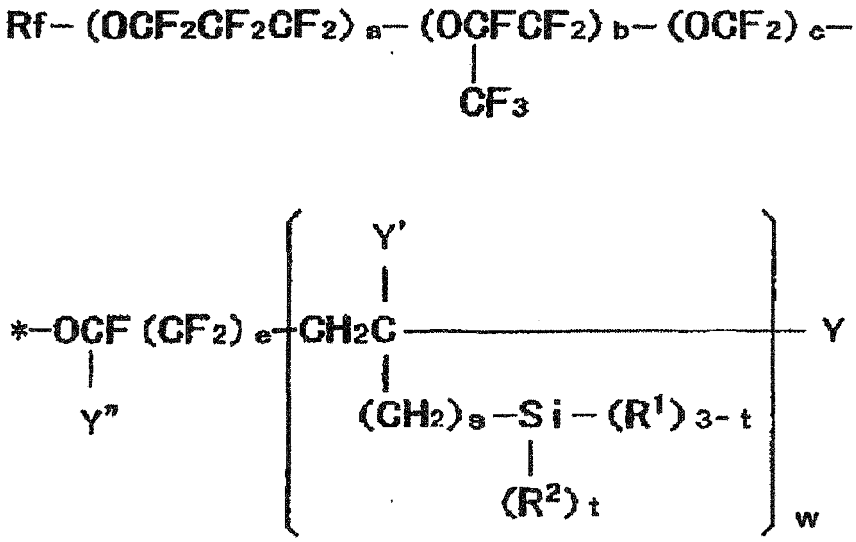

· · · (1)

(in the formula (1), Rf represents a straight or branched perfluoroalkyl group with 1 to 16 carbon atoms, Y represents iodine or hydrogen, Y' represents hydrogen or a lower alkyl group with 1 to 5 carbon atoms, Y" represents fluorine or a trifluoromethyl group, $R^1$ represents a hydrolyzable group, $R^2$ represents hydrogen or an inert monovalent organic group, a, b, c, and d each represents an integer of 0 to 200, e represents 0 or 1, s and t each represents an integer of 0 to 2, and w represents an integer of 1 to 10);
[Chem. 2]

$$F\text{-}(CF_2)_q\text{-}(OC_3F_6)_m\text{-}(OC_2F_4)_n\text{-}(OCF_2)_o(CH_2)_pXX''Si(X')_{3-k}(R^3)_k \qquad (2)$$

[Chem. 3]

$$F-(CF_2)_q-(OC_3F_6)_m-(OC_2F_4)_n-(OCF_2)_o(CH_2)_pXX''(X')_{2-k}(R^3)_kSiO(F-(CF_2)_q-(OC_3F_6)_m-(OC_2F_4)_n-(OCF_2)_o(CH_2)_pXX''(X')_{1-k}(R^3)_kSiO)_zF-(CF_2)_q-(OC_3F_6)_m-(OC_2F_4)_n-(OCF_2)_o(CH_2)_pXX''(X')_{2-k}(R^3)_kSi \quad (3)$$

[Chem. 4]

$$F-(CF_2)_q-(OC_3F_6)_m-(OC_2F_4)_n-(OCF_2)_o(CH_2)_pX(CH_2)_rSi(X')_{3-k}(R^3)_k \quad (4)$$

[Chem. 5]

$$F-(CF_2)_q-(OC_3F_6)_m-(OC_2F_4)_n-(OCF_2)_o(CH_2)_pX(CH_2)_r(X')_{2-k}(R^3)_kSiO(F-(CF_2)_q-(OC_3F_6)_m-(OC_2F_4)_n-(OCF_2)_o(CH_2)_pX(CH_2)_r(X')_{1-k}(R^3)_kSiO)_zF-(CF_2)_q-(OC_3F_6)_m-(OC_2F_4)_n-(OCF_2)_o(CH_2)_pX(CH_2)_r(X')_{2-k}(R^3)_kSi \quad (5)$$

(in the formulas (2) to (5), X represents oxygen or a divalent organic group, X' represents a hydrolyzable group, X'' represents a divalent organosilicon group, $R^3$ represents a straight or branched alkylene group with 1 to 22 carbon atoms, q represents an integer of 1 to 3, m, n, and o each represents an integer of 0 to 200, p represents 1 or 2, r represents an integer of 2 to 20, k represents an integer of 0 to 2, and z represents an integer of 0 to 10 when k is 0 or 1); and

[Chem. 6]

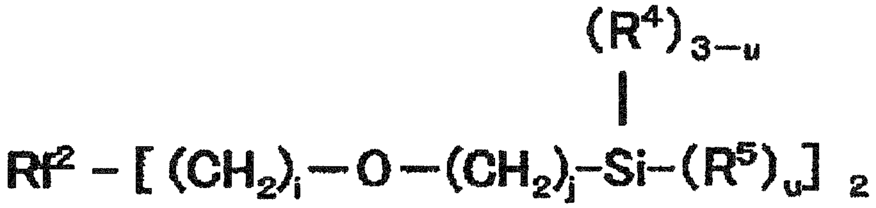

• • • (6)

(in the formula (6), $Rf^2$ represents a divalent straight perfluoropolyether group, $R^4$ represents a phenyl group or an alkyl group with 1 to 4 carbon atoms, $R^5$ represents a hydrolyzable group, i represents an integer of 0 to 2, j represents an integer of 1 to 5, and u represents 2 or 3).

**6.** The optical component according to any one of claims 1 to 5, wherein the multilayer film is a multilayer film having four or more layers.

**7.** The optical component according to any one of claims 1 to 6, wherein a functional thin film is provided between the plastic base and the multilayer film.

**8.** The optical component according to any one of claims 1 to 7, wherein
a dielectric film or a metallic film having a thickness of 20 nm or less is provided between a high refractive index material and a low refractive index material, the materials constituting the multilayer film.

**9.** The optical component according to claim 8, wherein
the high refractive index material includes zirconium dioxide, and the low refractive index material includes silicon dioxide.

**10.** The optical component according to any one of claims 1 to 9, the component being used for a spectacle lens.

**11.** A method of manufacturing the optical component according to any one of claims 1 to 10, the optical component being provided with a plastic base and a multilayer film provided on each of both surfaces including a first surface and a second surface of the plastic base, the method comprising:

a step of heating the plastic base; and a step of forming the multilayer film on the plastic base after adjusting a temperature of the plastic base to a predetermined temperature by the heating, wherein
the step of forming the multilayer film has a process of forming a high refractive index layer having a multilayer structure by alternately applying a high refractive index material and a low refractive index material in multilayers and has a process of forming, on the high refractive index layer, a low refractive index layer formed by a low refractive index material having a lower refractive index than a refractive index of the high refractive index layer, and wherein
a spectral characteristics curve indicating a relationship between wavelength and reflectivity of the multilayer film provided on the first surface of the plastic base has one local maximum at a first wavelength in a wavelength range of 380 nm to 780 nm and has one local minimum at a second wavelength 200 nm or less longer than the first wavelength, an average reflectivity of the multilayer film provided on the first surface in a wavelength range of the first wavelength ± 25 nm is 50% or less,
an average reflectivity of the multilayer film provided on the second surface of the plastic base in the wavelength range of the first wavelength ± 25 nm is 40% or less of the average reflectivity of the multilayer film provided on the first surface, and
a spectral characteristics curve indicating a relationship between wavelength and reflectivity of the multilayer film provided on the second surface of the plastic base does not have a local maximum in the wavelength range of the first wavelength ± 25 nm.

**12.** The method of manufacturing an optical component according to claim 11, comprising:

a step of forming the multilayer film by using a vacuum deposition method.

**13.** The method of manufacturing an optical component according to claim 11 or 12, wherein
the step of forming the multilayer film comprises a step of performing ion beam assisted film formation to form at least one layer of layers which constitute the multilayer film.

**14.** The method of manufacturing an optical component according to claim 13, wherein
the ion beam assisting is performed using at least one of gases selected from an inert gas, an oxygen gas, and a mixed gas of an inert gas and an oxygen gas.

**15.** The method of manufacturing an optical component according to claim 14, wherein
the inert gas is argon.

**16.** A method of quantifying ghost light, the ghost light arising from multiple reflection of light in an optical component that is provided with a plastic base and a multilayer film provided on each of both surfaces including a first surface and a second surface of the plastic base, the method including:

obtaining $A^n(\lambda)$ from a spectral reflectivity $R_1(\lambda)$ [%] of a multilayer film provided on the first surface, a spectral reflectivity $R_2(\lambda)$ [%] of a multilayer film provided on the second surface, and Expression (1) below
[Equation 5]

$$A^n(\lambda) = \left( \frac{R_2(\lambda)}{100} \times \frac{R_1(\lambda)}{100} \right)^n \quad \cdot \cdot \cdot \cdot \quad (1)$$

(in Expression (1), n represents an integer of 1 or more);
obtaining a spectral characteristic $T_{gn}(\lambda)$ [%] of ghost light due to multiple reflection in an optical component from the $R_1(\lambda)$, the $R_2(\lambda)$, the $A^n(\lambda)$, an optical absorptivity $F(\lambda)$ [%] by the plastic base, and Expression (2) below
[Equation 6]

$$T_{gn}(\lambda) = \sum_{n=1}^{\infty} \frac{100 - R_1(\lambda)}{100} \times \frac{100 - R_2(\lambda)}{100} \times A^n(\lambda) \times F^{2n+1}(\lambda) \quad \cdot \cdot \cdot \cdot \quad (2)$$

(in Expression (2), n represents an integer of 1 or more);

obtaining K from a relative spectral intensity S(λ) of a standard light source (D65), a color matching function x(λ)y(λ)z(λ), and Expression (3) below in accordance with JIS8701 by using the $T_{gn}(\lambda)$;
[Equation 7]

$$K = \frac{100}{\int_{380}^{780} S(\lambda)\bar{y}(\lambda)d\lambda} \cdot\cdot\cdot\cdot \quad (3)$$

obtaining a Y value of tristimulus values XYZ from the K, the S(λ), the color matching function x(λ)y(λ)z(λ), the $T_{gn}(\lambda)$, and Expression (4) below; and
[Equation 8]

$$Y = K\int_{380}^{780} S(\lambda)\bar{y}(\lambda)T_{gn}(\lambda)d\lambda \cdot\cdot\cdot\cdot \quad (4)$$

setting the Y value as the intensity of ghost light.

FIG. 1

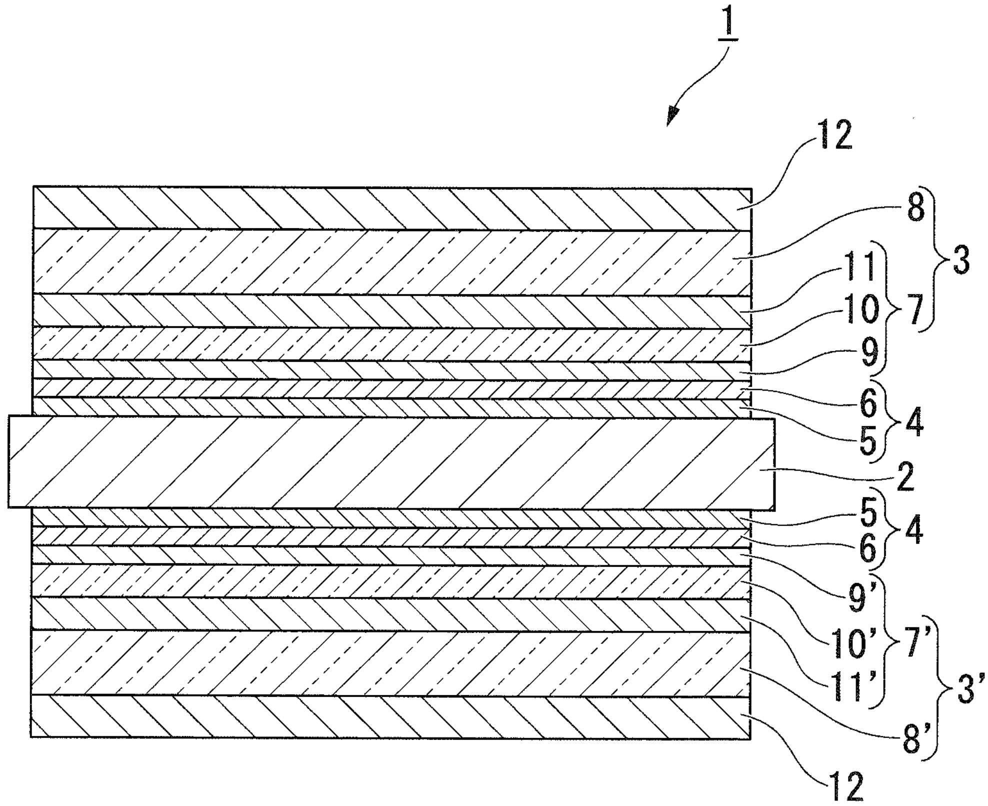

FIG. 2

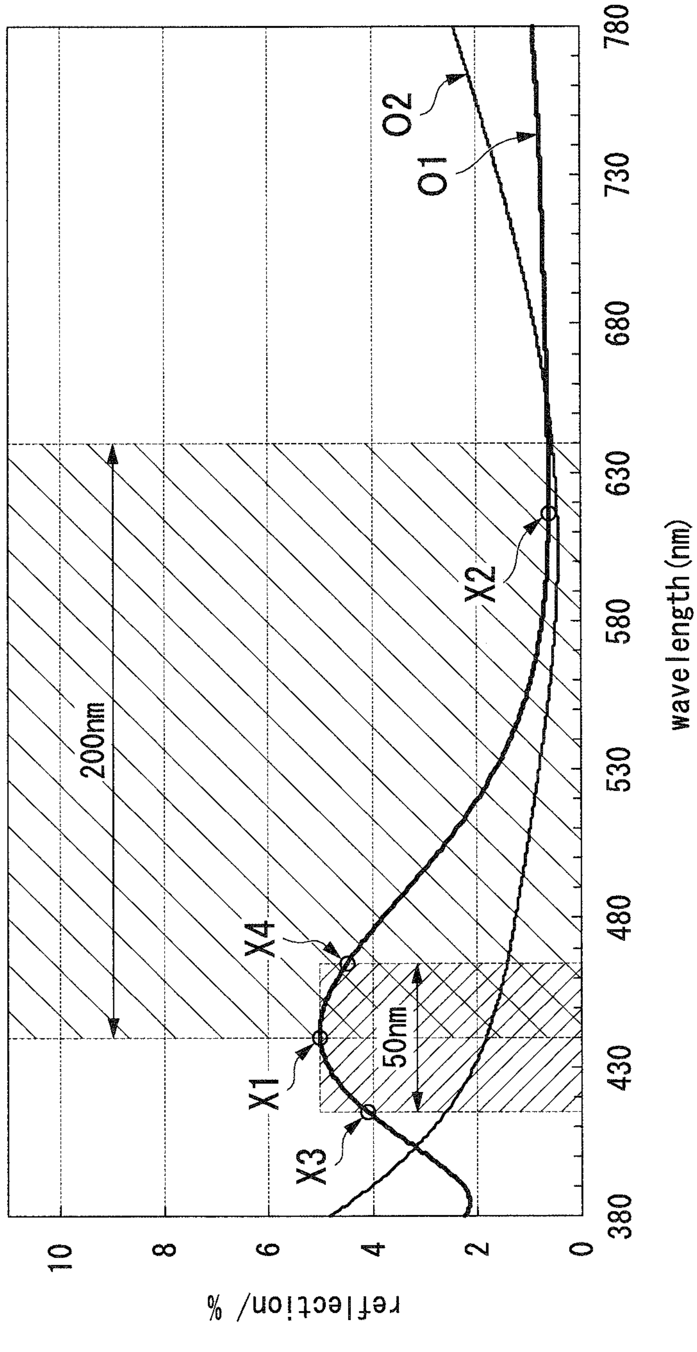

reflection/ %
wave length (nm)
0
2
4
6
8
10
380
430
480
530
580
630
680
730
780
200nm
50nm
X1
X2
X3
X4
O1
O2

FIG. 3

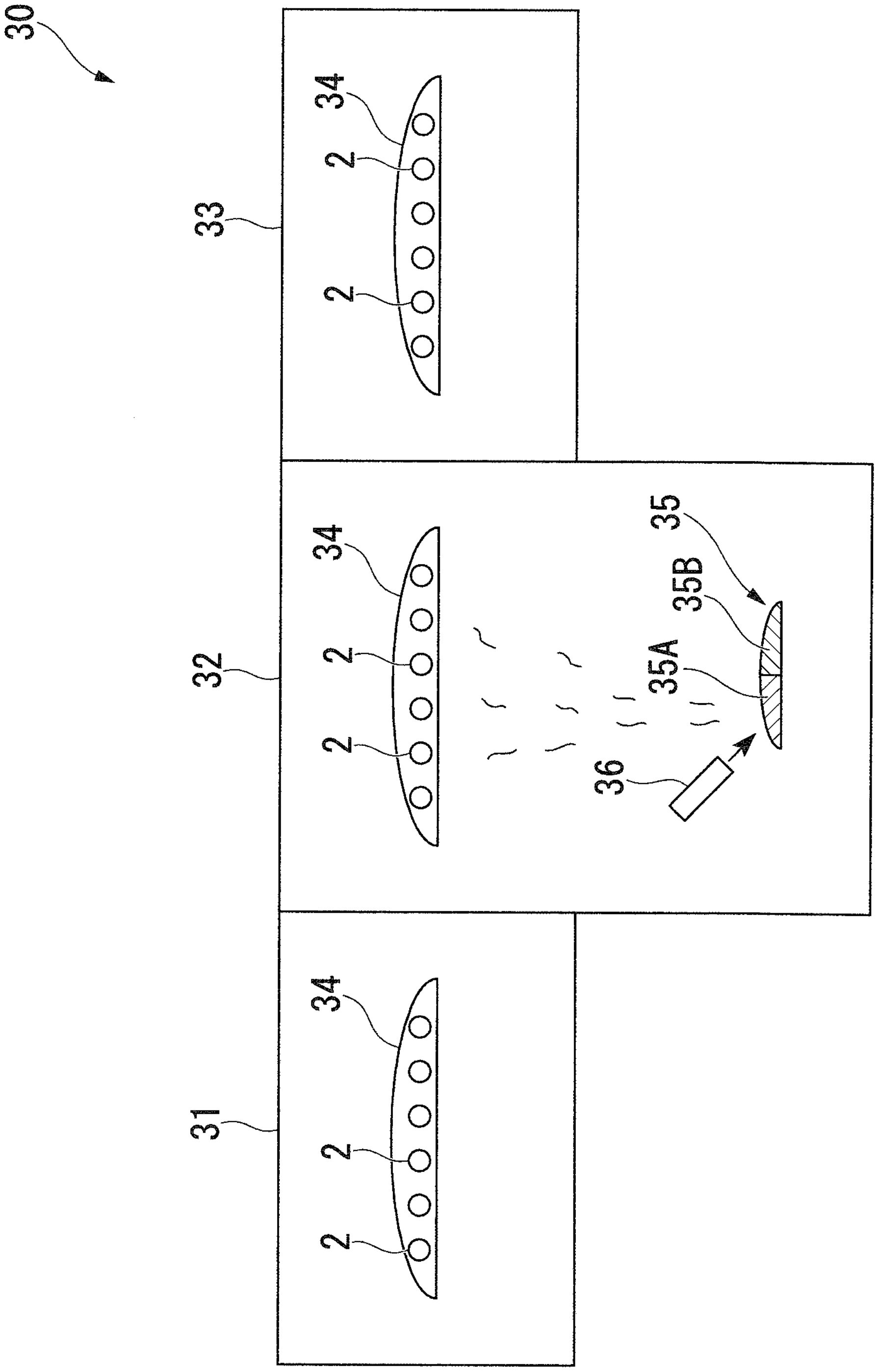

FIG. 4

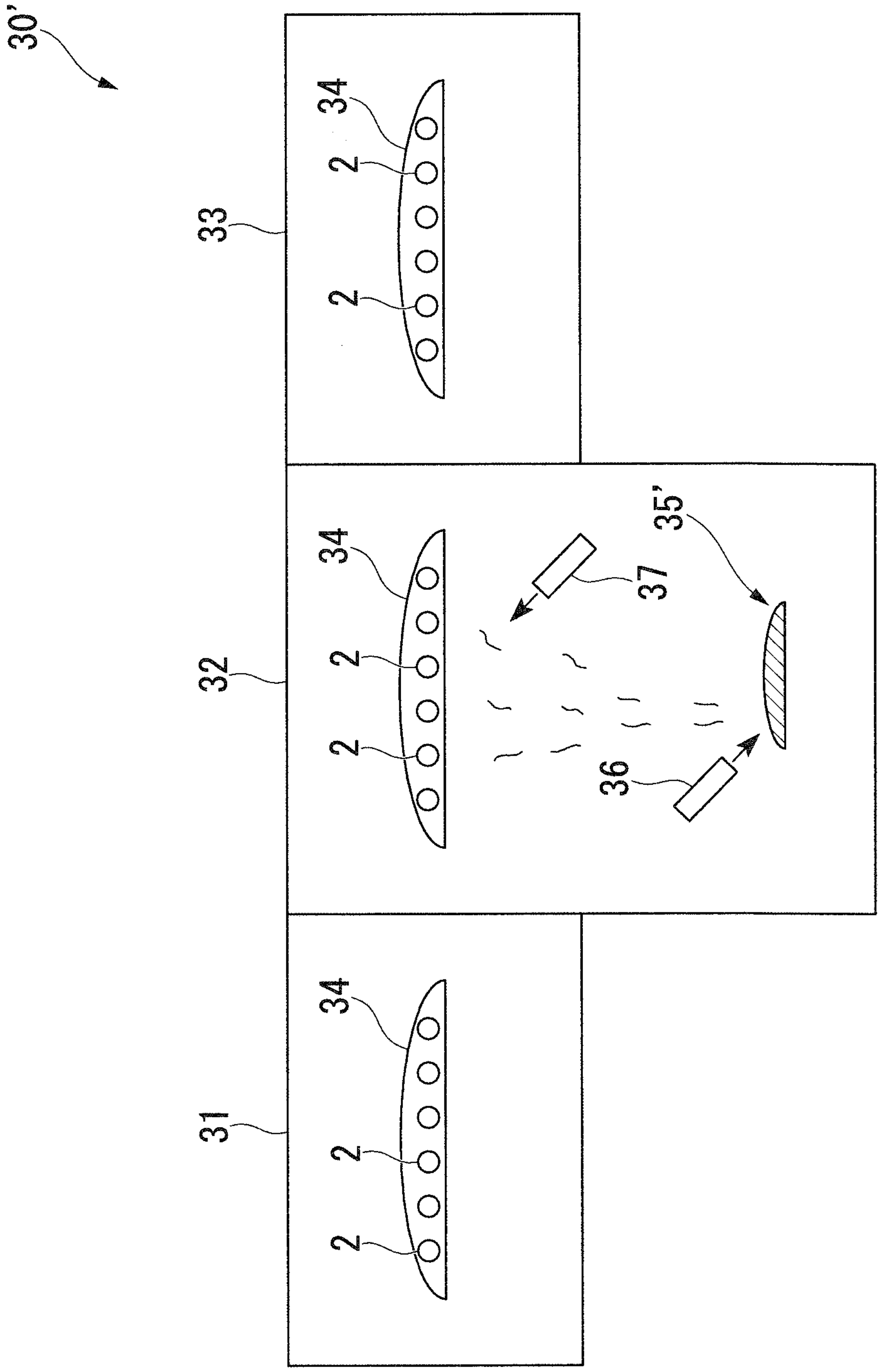

FIG. 5A

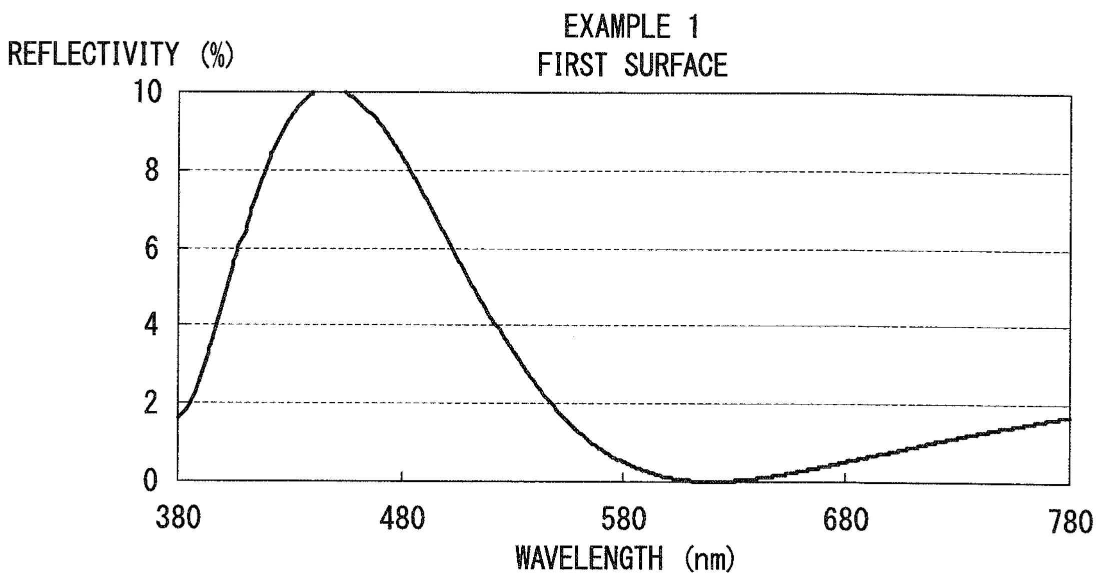
EXAMPLE 1
FIRST SURFACE
REFLECTIVITY (%)
10
8
6
4
2
0
380
480
580
680
780
WAVELENGTH (nm)

# FIG. 5B

| WAVELENGTH (nm) | REFLECTIVITY (%) |
|---|---|
| 380 | 1. 63 |
| 385 | 1. 95 |
| 390 | 2. 62 |
| 395 | 3. 51 |
| 400 | 4. 52 |
| 405 | 5. 54 |
| 410 | 6. 52 |
| 415 | 7. 42 |
| 420 | 8. 20 |
| 425 | 8. 84 |
| 430 | 9. 35 |
| 435 | 9. 73 |
| 440 | 9. 96 |
| 445 | 10. 08 |
| 450 | 10. 08 |
| 455 | 9. 97 |
| 460 | 9. 78 |
| 465 | 9. 50 |
| 470 | 9. 16 |
| 475 | 8. 76 |
| 480 | 8. 32 |
| 485 | 7. 84 |
| 490 | 7. 34 |
| 495 | 6. 82 |
| 500 | 6. 30 |
| 505 | 5. 77 |
| 510 | 5. 26 |

| WAVELENGTH (nm) | REFLECTIVITY (%) |
|---|---|
| 515 | 4. 75 |
| 520 | 4. 26 |
| 525 | 3. 80 |
| 530 | 3. 35 |
| 535 | 2. 94 |
| 540 | 2. 55 |
| 545 | 2. 19 |
| 550 | 1. 87 |
| 555 | 1. 57 |
| 560 | 1. 30 |
| 565 | 1. 06 |
| 570 | 0. 85 |
| 575 | 0. 67 |
| 580 | 0. 51 |
| 585 | 0. 38 |
| 590 | 0. 27 |
| 595 | 0. 18 |
| 600 | 0. 11 |
| 605 | 0. 06 |
| 610 | 0. 03 |
| 615 | 0. 01 |
| 620 | 0. 00 |
| 625 | 0. 01 |
| 630 | 0. 02 |
| 635 | 0. 05 |
| 640 | 0. 08 |
| 645 | 0. 12 |

| WAVELENGTH (nm) | REFLECTIVITY (%) |
|---|---|
| 650 | 0. 16 |
| 655 | 0. 21 |
| 660 | 0. 27 |
| 665 | 0. 32 |
| 670 | 0. 38 |
| 675 | 0. 44 |
| 680 | 0. 51 |
| 685 | 0. 57 |
| 690 | 0. 64 |
| 695 | 0. 70 |
| 700 | 0. 77 |
| 705 | 0. 83 |
| 710 | 0. 90 |
| 715 | 0. 96 |
| 720 | 1. 02 |
| 725 | 1. 08 |
| 730 | 1. 14 |
| 735 | 1. 20 |
| 740 | 1. 26 |
| 745 | 1. 32 |
| 750 | 1. 38 |
| 755 | 1. 43 |
| 760 | 1. 49 |
| 765 | 1. 54 |
| 770 | 1. 59 |
| 775 | 1. 64 |
| 780 | 1. 70 |

FIG. 6A

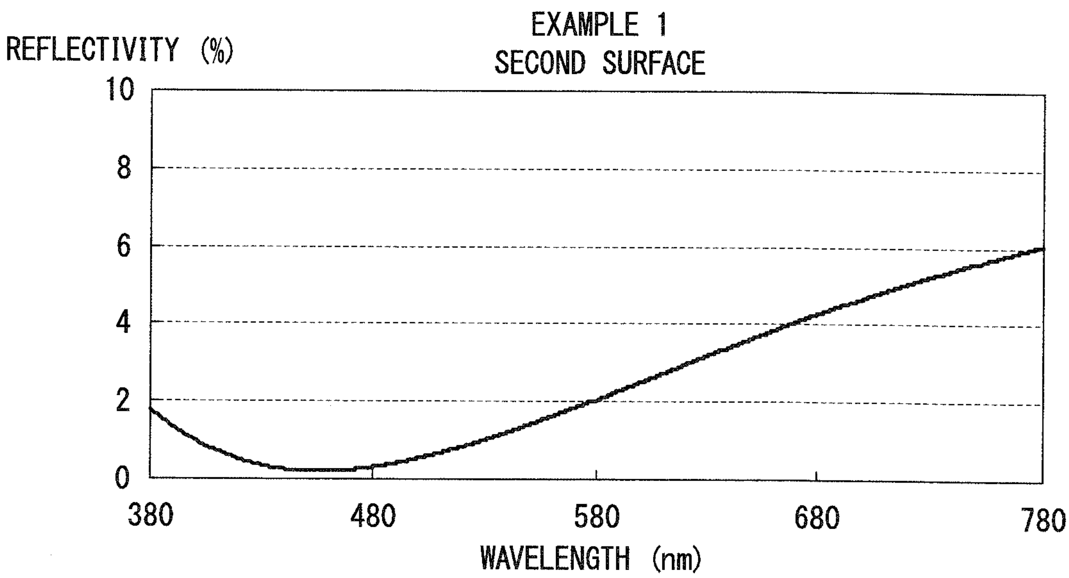
EXAMPLE 1
SECOND SURFACE
REFLECTIVITY (%)
10
8
6
4
2
0
380
480
580
680
780
WAVELENGTH (nm)

# FIG. 6B

| WAVELENGTH (nm) | REFLECTIVITY (%) |
|---|---|
| 380 | 1. 79 |
| 385 | 1. 57 |
| 390 | 1. 37 |
| 395 | 1. 18 |
| 400 | 1. 01 |
| 405 | 0. 86 |
| 410 | 0. 72 |
| 415 | 0. 61 |
| 420 | 0. 51 |
| 425 | 0. 42 |
| 430 | 0. 35 |
| 435 | 0. 30 |
| 440 | 0. 25 |
| 445 | 0. 22 |
| 450 | 0. 21 |
| 455 | 0. 20 |
| 460 | 0. 20 |
| 465 | 0. 22 |
| 470 | 0. 24 |
| 475 | 0. 27 |
| 480 | 0. 31 |
| 485 | 0. 35 |
| 490 | 0. 40 |
| 495 | 0. 46 |
| 500 | 0. 52 |
| 505 | 0. 59 |
| 510 | 0. 67 |

| WAVELENGTH (nm) | REFLECTIVITY (%) |
|---|---|
| 515 | 0. 74 |
| 520 | 0. 83 |
| 525 | 0. 91 |
| 530 | 1. 00 |
| 535 | 1. 10 |
| 540 | 1. 19 |
| 545 | 1. 29 |
| 550 | 1. 39 |
| 555 | 1. 50 |
| 560 | 1. 60 |
| 565 | 1. 71 |
| 570 | 1. 82 |
| 575 | 1. 93 |
| 580 | 2. 04 |
| 585 | 2. 15 |
| 590 | 2. 26 |
| 595 | 2. 38 |
| 600 | 2. 49 |
| 605 | 2. 60 |
| 610 | 2. 72 |
| 615 | 2. 83 |
| 620 | 2. 95 |
| 625 | 3. 06 |
| 630 | 3. 17 |
| 635 | 3. 28 |
| 640 | 3. 40 |
| 645 | 3. 51 |

| WAVELENGTH (nm) | REFLECTIVITY (%) |
|---|---|
| 650 | 3. 62 |
| 655 | 3. 73 |
| 660 | 3. 84 |
| 665 | 3. 94 |
| 670 | 4. 05 |
| 675 | 4. 16 |
| 680 | 4. 26 |
| 685 | 4. 36 |
| 690 | 4. 46 |
| 695 | 4. 56 |
| 700 | 4. 66 |
| 705 | 4. 76 |
| 710 | 4. 86 |
| 715 | 4. 95 |
| 720 | 5. 05 |
| 725 | 5. 14 |
| 730 | 5. 23 |
| 735 | 5. 32 |
| 740 | 5. 41 |
| 745 | 5. 49 |
| 750 | 5. 58 |
| 755 | 5. 66 |
| 760 | 5. 74 |
| 765 | 5. 82 |
| 770 | 5. 90 |
| 775 | 5. 98 |
| 780 | 6. 05 |

FIG. 7A

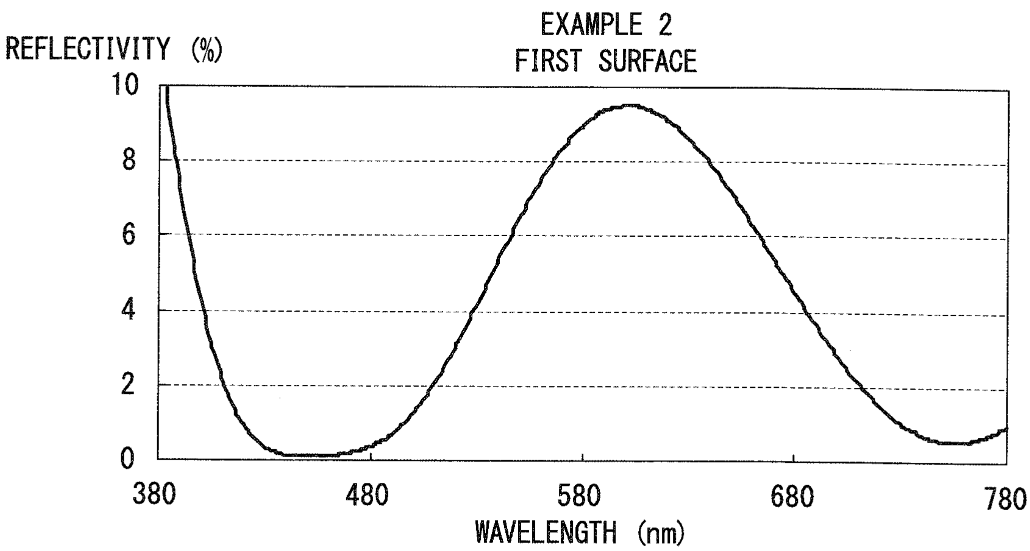
EXAMPLE 2
FIRST SURFACE
REFLECTIVITY (%)
10
8
6
4
2
0
380
480
580
680
780
WAVELENGTH (nm)

# FIG. 7B

| WAVELENGTH (nm) | REFLECTIVITY (%) |
|---|---|
| 380 | 11. 29 |
| 385 | 9. 20 |
| 390 | 7. 38 |
| 395 | 5. 80 |
| 400 | 4. 45 |
| 405 | 3. 32 |
| 410 | 2. 40 |
| 415 | 1. 69 |
| 420 | 1. 15 |
| 425 | 0. 76 |
| 430 | 0. 50 |
| 435 | 0. 33 |
| 440 | 0. 23 |
| 445 | 0. 17 |
| 450 | 0. 15 |
| 455 | 0. 15 |
| 460 | 0. 17 |
| 465 | 0. 20 |
| 470 | 0. 26 |
| 475 | 0. 34 |
| 480 | 0. 46 |
| 485 | 0. 62 |
| 490 | 0. 82 |
| 495 | 1. 08 |
| 500 | 1. 39 |
| 505 | 1. 74 |
| 510 | 2. 15 |

| WAVELENGTH (nm) | REFLECTIVITY (%) |
|---|---|
| 515 | 2. 60 |
| 520 | 3. 08 |
| 525 | 3. 60 |
| 530 | 4. 13 |
| 535 | 4. 67 |
| 540 | 5. 20 |
| 545 | 5. 73 |
| 550 | 6. 24 |
| 555 | 6. 72 |
| 560 | 7. 16 |
| 565 | 7. 56 |
| 570 | 7. 92 |
| 575 | 8. 22 |
| 580 | 8. 47 |
| 585 | 8. 67 |
| 590 | 8. 81 |
| 595 | 8. 89 |
| 600 | 8. 92 |
| 605 | 8. 90 |
| 610 | 8. 82 |
| 615 | 8. 69 |
| 620 | 8. 51 |
| 625 | 8. 29 |
| 630 | 8. 03 |
| 635 | 7. 73 |
| 640 | 7. 40 |
| 645 | 7. 04 |

| WAVELENGTH (nm) | REFLECTIVITY (%) |
|---|---|
| 650 | 6. 66 |
| 655 | 6. 26 |
| 660 | 5. 85 |
| 665 | 5. 43 |
| 670 | 5. 00 |
| 675 | 4. 57 |
| 680 | 4. 15 |
| 685 | 3. 74 |
| 690 | 3. 33 |
| 695 | 2. 95 |
| 700 | 2. 58 |
| 705 | 2. 24 |
| 710 | 1. 93 |
| 715 | 1. 64 |
| 720 | 1. 38 |
| 725 | 1. 16 |
| 730 | 0. 97 |
| 735 | 0. 81 |
| 740 | 0. 70 |
| 745 | 0. 62 |
| 750 | 0. 57 |
| 755 | 0. 56 |
| 760 | 0. 59 |
| 765 | 0. 65 |
| 770 | 0. 75 |
| 775 | 0. 87 |
| 780 | 1. 03 |

# FIG. 8A

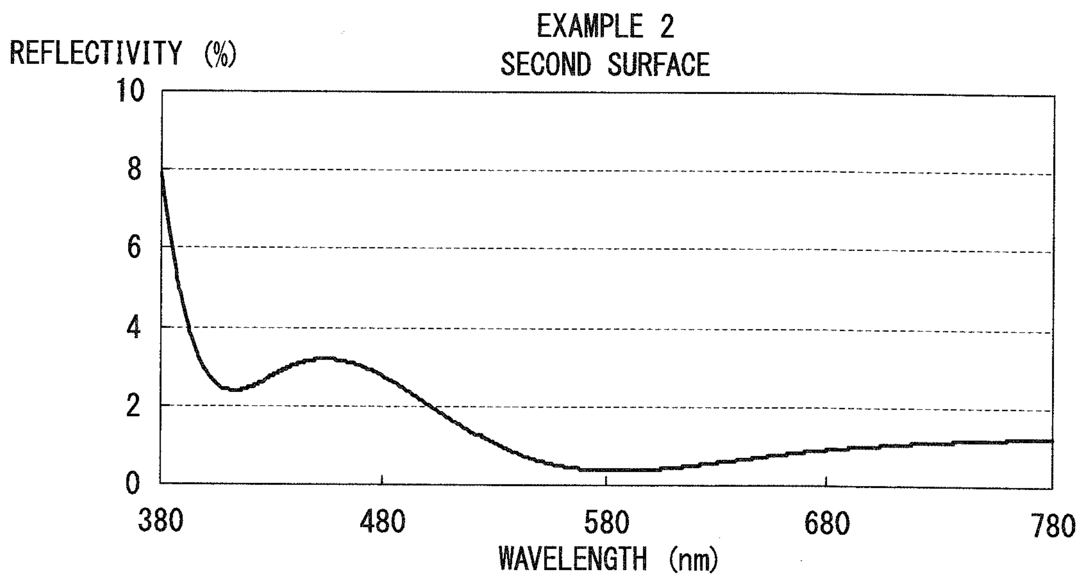
EXAMPLE 2
SECOND SURFACE
REFLECTIVITY (%)
10
8
6
4
2
0
380
480
580
680
780
WAVELENGTH (nm)

FIG. 8B

| WAVELENGTH (nm) | REFLECTIVITY (%) |
|---|---|
| 380 | 7. 88 |
| 385 | 6. 01 |
| 390 | 4. 60 |
| 395 | 3. 60 |
| 400 | 2. 95 |
| 405 | 2. 57 |
| 410 | 2. 40 |
| 415 | 2. 39 |
| 420 | 2. 47 |
| 425 | 2. 59 |
| 430 | 2. 74 |
| 435 | 2. 89 |
| 440 | 3. 02 |
| 445 | 3. 11 |
| 450 | 3. 17 |
| 455 | 3. 19 |
| 460 | 3. 17 |
| 465 | 3. 11 |
| 470 | 3. 02 |
| 475 | 2. 91 |
| 480 | 2. 76 |
| 485 | 2. 60 |
| 490 | 2. 43 |
| 495 | 2. 25 |
| 500 | 2. 06 |
| 505 | 1. 88 |
| 510 | 1. 70 |

| WAVELENGTH (nm) | REFLECTIVITY (%) |
|---|---|
| 515 | 1. 52 |
| 520 | 1. 35 |
| 525 | 1. 20 |
| 530 | 1. 05 |
| 535 | 0. 92 |
| 540 | 0. 81 |
| 545 | 0. 71 |
| 550 | 0. 62 |
| 555 | 0. 55 |
| 560 | 0. 49 |
| 565 | 0. 44 |
| 570 | 0. 40 |
| 575 | 0. 38 |
| 580 | 0. 37 |
| 585 | 0. 36 |
| 590 | 0. 36 |
| 595 | 0. 38 |
| 600 | 0. 39 |
| 605 | 0. 41 |
| 610 | 0. 44 |
| 615 | 0. 47 |
| 620 | 0. 50 |
| 625 | 0. 54 |
| 630 | 0. 57 |
| 635 | 0. 61 |
| 640 | 0. 64 |
| 645 | 0. 68 |

| WAVELENGTH (nm) | REFLECTIVITY (%) |
|---|---|
| 650 | 0. 72 |
| 655 | 0. 75 |
| 660 | 0. 79 |
| 665 | 0. 82 |
| 670 | 0. 85 |
| 675 | 0. 88 |
| 680 | 0. 91 |
| 685 | 0. 94 |
| 690 | 0. 96 |
| 695 | 0. 99 |
| 700 | 1. 01 |
| 705 | 1. 03 |
| 710 | 1. 05 |
| 715 | 1. 07 |
| 720 | 1. 08 |
| 725 | 1. 10 |
| 730 | 1. 11 |
| 735 | 1. 13 |
| 740 | 1. 14 |
| 745 | 1. 15 |
| 750 | 1. 17 |
| 755 | 1. 18 |
| 760 | 1. 19 |
| 765 | 1. 20 |
| 770 | 1. 21 |
| 775 | 1. 22 |
| 780 | 1. 24 |

FIG. 9A

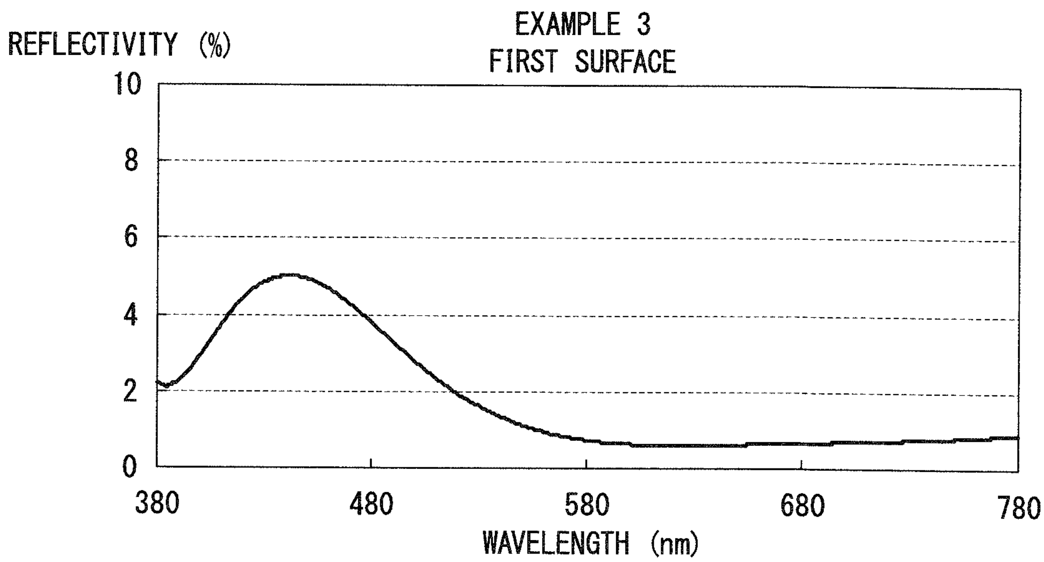
EXAMPLE 3
FIRST SURFACE
REFLECTIVITY (%)
10
8
6
4
2
0
380
480
580
680
780
WAVELENGTH (nm)

# FIG. 9B

| WAVELENGTH (nm) | REFLECTIVITY (%) | WAVELENGTH (nm) | REFLECTIVITY (%) | WAVELENGTH (nm) | REFLECTIVITY (%) |
|---|---|---|---|---|---|
| 380 | 2. 23 | 515 | 2. 17 | 650 | 0. 63 |
| 385 | 2. 13 | 520 | 1. 97 | 655 | 0. 64 |
| 390 | 2. 26 | 525 | 1. 80 | 660 | 0. 64 |
| 395 | 2. 55 | 530 | 1. 63 | 665 | 0. 65 |
| 400 | 2. 93 | 535 | 1. 48 | 670 | 0. 66 |
| 405 | 3. 34 | 540 | 1. 35 | 675 | 0. 66 |
| 410 | 3. 74 | 545 | 1. 23 | 680 | 0. 67 |
| 415 | 4. 11 | 550 | 1. 12 | 685 | 0. 68 |
| 420 | 4. 42 | 555 | 1. 03 | 690 | 0. 68 |
| 425 | 4. 67 | 560 | 0. 95 | 695 | 0. 69 |
| 430 | 4. 85 | 565 | 0. 88 | 700 | 0. 70 |
| 435 | 4. 97 | 570 | 0. 82 | 705 | 0. 71 |
| 440 | 5. 02 | 575 | 0. 77 | 710 | 0. 71 |
| 445 | 5. 00 | 580 | 0. 73 | 715 | 0. 72 |
| 450 | 4. 94 | 585 | 0. 70 | 720 | 0. 73 |
| 455 | 4. 82 | 590 | 0. 67 | 725 | 0. 74 |
| 460 | 4. 67 | 595 | 0. 65 | 730 | 0. 75 |
| 465 | 4. 49 | 600 | 0. 64 | 735 | 0. 76 |
| 470 | 4. 28 | 605 | 0. 63 | 740 | 0. 77 |
| 475 | 4. 05 | 610 | 0. 62 | 745 | 0. 79 |
| 480 | 3. 81 | 615 | 0. 61 | 750 | 0. 80 |
| 485 | 3. 56 | 620 | 0. 61 | 755 | 0. 82 |
| 490 | 3. 31 | 625 | 0. 61 | 760 | 0. 83 |
| 495 | 3. 07 | 630 | 0. 61 | 765 | 0. 85 |
| 500 | 2. 83 | 635 | 0. 62 | 770 | 0. 87 |
| 505 | 2. 60 | 640 | 0. 62 | 775 | 0. 89 |
| 510 | 2. 38 | 645 | 0. 63 | 780 | 0. 91 |

FIG. 10A

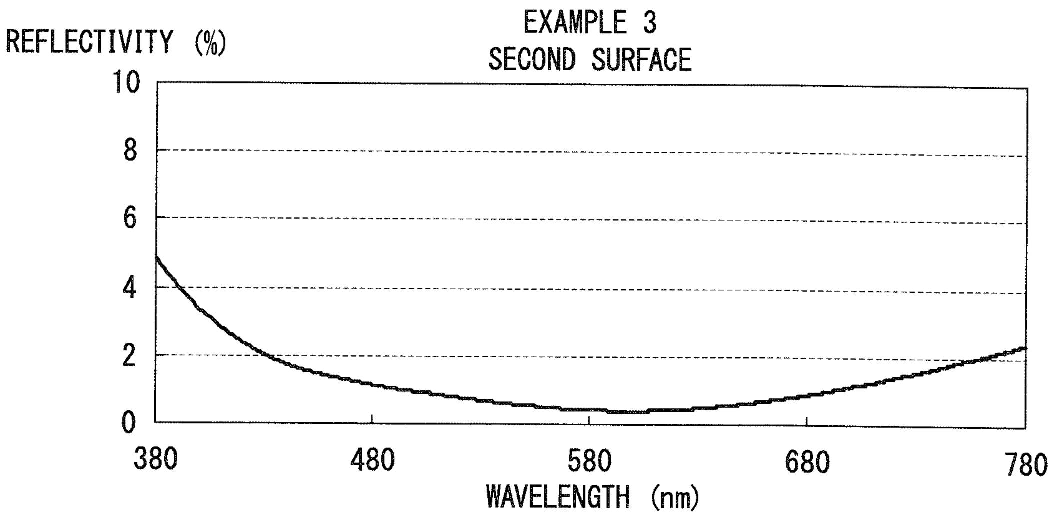
EXAMPLE 3
SECOND SURFACE
REFLECTIVITY (%)
10
8
6
4
2
0
380
480
580
680
780
WAVELENGTH (nm)

# FIG. 10B

| WAVELENGTH (nm) | REFLECTIVITY (%) |
|---|---|
| 380 | 4. 85 |
| 385 | 4. 44 |
| 390 | 4. 06 |
| 395 | 3. 71 |
| 400 | 3. 38 |
| 405 | 3. 09 |
| 410 | 2. 83 |
| 415 | 2. 59 |
| 420 | 2. 38 |
| 425 | 2. 20 |
| 430 | 2. 03 |
| 435 | 1. 89 |
| 440 | 1. 77 |
| 445 | 1. 66 |
| 450 | 1. 56 |
| 455 | 1. 47 |
| 460 | 1. 40 |
| 465 | 1. 33 |
| 470 | 1. 26 |
| 475 | 1. 20 |
| 480 | 1. 15 |
| 485 | 1. 09 |
| 490 | 1. 04 |
| 495 | 0. 99 |
| 500 | 0. 95 |
| 505 | 0. 90 |
| 510 | 0. 86 |

| WAVELENGTH (nm) | REFLECTIVITY (%) |
|---|---|
| 515 | 0. 81 |
| 520 | 0. 77 |
| 525 | 0. 73 |
| 530 | 0. 69 |
| 535 | 0. 65 |
| 540 | 0. 62 |
| 545 | 0. 59 |
| 550 | 0. 55 |
| 555 | 0. 52 |
| 560 | 0. 50 |
| 565 | 0. 47 |
| 570 | 0. 45 |
| 575 | 0. 44 |
| 580 | 0. 42 |
| 585 | 0. 41 |
| 590 | 0. 40 |
| 595 | 0. 40 |
| 600 | 0. 40 |
| 605 | 0. 40 |
| 610 | 0. 41 |
| 615 | 0. 42 |
| 620 | 0. 43 |
| 625 | 0. 45 |
| 630 | 0. 47 |
| 635 | 0. 50 |
| 640 | 0. 53 |
| 645 | 0. 56 |

| WAVELENGTH (nm) | REFLECTIVITY (%) |
|---|---|
| 650 | 0. 60 |
| 655 | 0. 64 |
| 660 | 0. 68 |
| 665 | 0. 72 |
| 670 | 0. 77 |
| 675 | 0. 83 |
| 680 | 0. 88 |
| 685 | 0. 94 |
| 690 | 1. 00 |
| 695 | 1. 06 |
| 700 | 1. 12 |
| 705 | 1. 19 |
| 710 | 1. 26 |
| 715 | 1. 33 |
| 720 | 1. 40 |
| 725 | 1. 48 |
| 730 | 1. 55 |
| 735 | 1. 63 |
| 740 | 1. 71 |
| 745 | 1. 78 |
| 750 | 1. 87 |
| 755 | 1. 95 |
| 760 | 2. 03 |
| 765 | 2. 11 |
| 770 | 2. 20 |
| 775 | 2. 28 |
| 780 | 2. 36 |

FIG. 11A

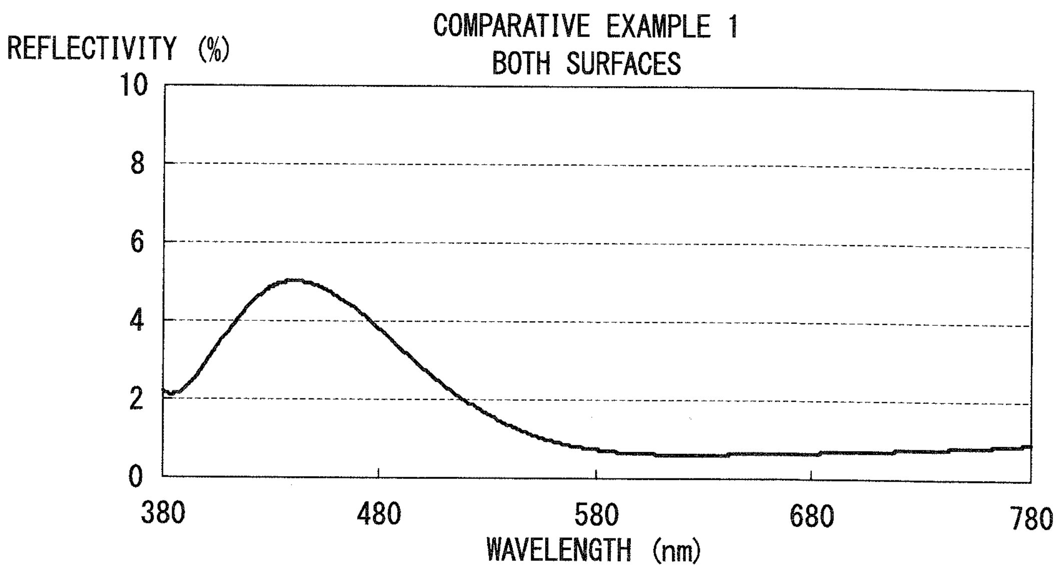
COMPARATIVE EXAMPLE 1
BOTH SURFACES
REFLECTIVITY (%)
10
8
6
4
2
0
380
480
580
680
780
WAVELENGTH (nm)

# FIG. 11B

| WAVELENGTH (nm) | REFLECTIVITY (%) | WAVELENGTH (nm) | REFLECTIVITY (%) | WAVELENGTH (nm) | REFLECTIVITY (%) |
|---|---|---|---|---|---|
| 380 | 2. 23 | 515 | 2. 17 | 650 | 0. 63 |
| 385 | 2. 13 | 520 | 1. 97 | 655 | 0. 64 |
| 390 | 2. 26 | 525 | 1. 80 | 660 | 0. 64 |
| 395 | 2. 55 | 530 | 1. 63 | 665 | 0. 65 |
| 400 | 2. 93 | 535 | 1. 48 | 670 | 0. 66 |
| 405 | 3. 34 | 540 | 1. 35 | 675 | 0. 66 |
| 410 | 3. 74 | 545 | 1. 23 | 680 | 0. 67 |
| 415 | 4. 11 | 550 | 1. 12 | 685 | 0. 68 |
| 420 | 4. 42 | 555 | 1. 03 | 690 | 0. 68 |
| 425 | 4. 67 | 560 | 0. 95 | 695 | 0. 69 |
| 430 | 4. 85 | 565 | 0. 88 | 700 | 0. 70 |
| 435 | 4. 97 | 570 | 0. 82 | 705 | 0. 71 |
| 440 | 5. 02 | 575 | 0. 77 | 710 | 0. 71 |
| 445 | 5. 00 | 580 | 0. 73 | 715 | 0. 72 |
| 450 | 4. 94 | 585 | 0. 70 | 720 | 0. 73 |
| 455 | 4. 82 | 590 | 0. 67 | 725 | 0. 74 |
| 460 | 4. 67 | 595 | 0. 65 | 730 | 0. 75 |
| 465 | 4. 49 | 600 | 0. 64 | 735 | 0. 76 |
| 470 | 4. 28 | 605 | 0. 63 | 740 | 0. 77 |
| 475 | 4. 05 | 610 | 0. 62 | 745 | 0. 79 |
| 480 | 3. 81 | 615 | 0. 61 | 750 | 0. 80 |
| 485 | 3. 56 | 620 | 0. 61 | 755 | 0. 82 |
| 490 | 3. 31 | 625 | 0. 61 | 760 | 0. 83 |
| 495 | 3. 07 | 630 | 0. 61 | 765 | 0. 85 |
| 500 | 2. 83 | 635 | 0. 62 | 770 | 0. 87 |
| 505 | 2. 60 | 640 | 0. 62 | 775 | 0. 89 |
| 510 | 2. 38 | 645 | 0. 63 | 780 | 0. 91 |

# FIG. 12A

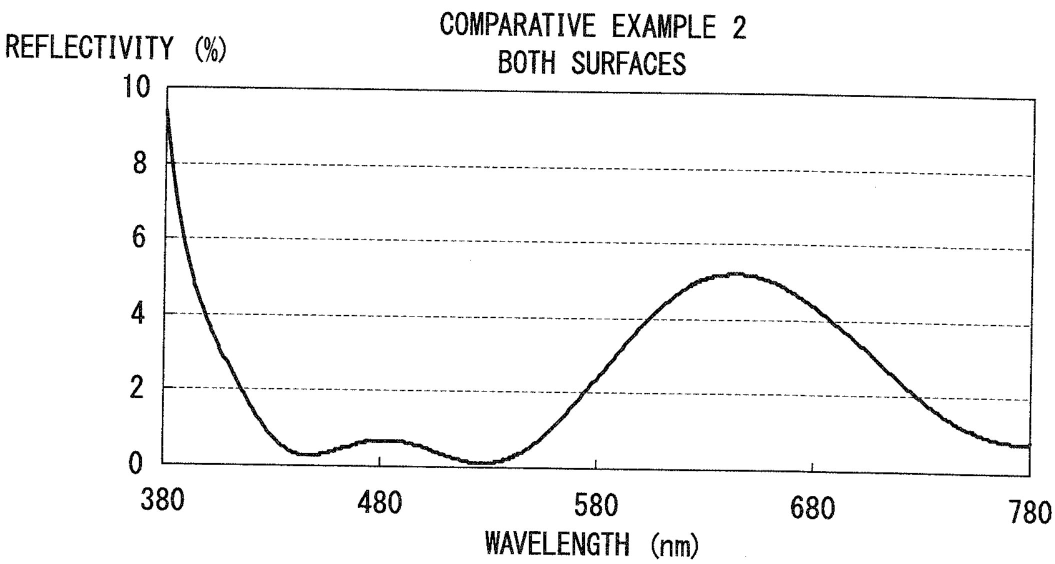
COMPARATIVE EXAMPLE 2
BOTH SURFACES
REFLECTIVITY (%)
10
8
6
4
2
0
380
480
580
680
780
WAVELENGTH (nm)

# FIG. 12B

| WAVELENGTH (nm) | REFLECTIVITY (%) |
|---|---|
| 380 | 9.38 |
| 385 | 7.20 |
| 390 | 5.72 |
| 395 | 4.68 |
| 400 | 3.90 |
| 405 | 3.25 |
| 410 | 2.65 |
| 415 | 2.10 |
| 420 | 1.59 |
| 425 | 1.15 |
| 430 | 0.79 |
| 435 | 0.53 |
| 440 | 0.36 |
| 445 | 0.29 |
| 450 | 0.28 |
| 455 | 0.33 |
| 460 | 0.42 |
| 465 | 0.51 |
| 470 | 0.60 |
| 475 | 0.66 |
| 480 | 0.70 |
| 485 | 0.70 |
| 490 | 0.66 |
| 495 | 0.60 |
| 500 | 0.52 |
| 505 | 0.42 |
| 510 | 0.32 |

| WAVELENGTH (nm) | REFLECTIVITY (%) |
|---|---|
| 515 | 0.23 |
| 520 | 0.16 |
| 525 | 0.12 |
| 530 | 0.12 |
| 535 | 0.16 |
| 540 | 0.25 |
| 545 | 0.38 |
| 550 | 0.56 |
| 555 | 0.79 |
| 560 | 1.05 |
| 565 | 1.35 |
| 570 | 1.68 |
| 575 | 2.02 |
| 580 | 2.37 |
| 585 | 2.73 |
| 590 | 3.08 |
| 595 | 3.42 |
| 600 | 3.75 |
| 605 | 4.04 |
| 610 | 4.32 |
| 615 | 4.55 |
| 620 | 4.76 |
| 625 | 4.93 |
| 630 | 5.05 |
| 635 | 5.14 |
| 640 | 5.19 |
| 645 | 5.20 |

| WAVELENGTH (nm) | REFLECTIVITY (%) |
|---|---|
| 650 | 5.18 |
| 655 | 5.12 |
| 660 | 5.02 |
| 665 | 4.89 |
| 670 | 4.74 |
| 675 | 4.56 |
| 680 | 4.35 |
| 685 | 4.13 |
| 690 | 3.90 |
| 695 | 3.65 |
| 700 | 3.39 |
| 705 | 3.13 |
| 710 | 2.87 |
| 715 | 2.62 |
| 720 | 2.36 |
| 725 | 2.12 |
| 730 | 1.89 |
| 735 | 1.68 |
| 740 | 1.49 |
| 745 | 1.31 |
| 750 | 1.16 |
| 755 | 1.03 |
| 760 | 0.93 |
| 765 | 0.86 |
| 770 | 0.82 |
| 775 | 0.80 |
| 780 | 0.81 |

## INTERNATIONAL SEARCH REPORT

International application No.
PCT/JP2013/078280

A. CLASSIFICATION OF SUBJECT MATTER
*G02B1/11*(2006.01)i, *B32B7/02*(2006.01)i, *G01J3/50*(2006.01)i, *G02B5/26*(2006.01)i, *G02B5/28*(2006.01)i, *G02C7/00*(2006.01)i

According to International Patent Classification (IPC) or to both national classification and IPC

B. FIELDS SEARCHED

Minimum documentation searched (classification system followed by classification symbols)
G02B1/11, B32B7/02, G01J3/50, G02B5/26, G02B5/28, G02C7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-093689 A (Nikon-Essilor Co., Ltd.), 17 May 2012 (17.05.2012), claims 6 to 8, 11; examples; fig. 13, 14 & EP 2624044 A & WO 2012/043218 A & CA 2812742 A | 1-16 |
| Y | JP 2005-148375 A (Sumitomo Osaka Cement Co., Ltd.), 09 June 2005 (09.06.2005), paragraphs [0034], [0040]; examples 1 to 3; fig. 1 to 3 (Family: none) | 1-16 |
| Y | JP 2002-189122 A (Bridgestone Corp.), 05 July 2002 (05.07.2002), paragraphs [0007] to [0009]; fig. 1 (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 November, 2013 (12.11.13) | 19 November, 2013 (19.11.13) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2013/078280

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-251760 A (Seiko Epson Corp.), 21 September 2006 (21.09.2006), example 1; fig. 6 & US 2006/0177638 A1 & EP 1688764 A2 | 1-16 |
| Y | JP 2002-031701 A (Konica Corp.), 31 January 2002 (31.01.2002), examples 3, 5; fig. 4, 7 & US 2002/0024705 A1 & EP 1174734 A2 | 1-16 |
| Y | JP 63-081404 A (Minolta Camera Co., Ltd.), 12 April 1988 (12.04.1988), examples; fig. 1 to 13 & US 4921760 A | 1-16 |
| Y | JP 2002-006128 A (Canon Inc.), 09 January 2002 (09.01.2002), paragraph [0116] & US 2002/0034011 A1 & EP 1148355 A1 & DE 60105481 T | 2,16 |
| Y | WO 2008/053712 A1 (Nikon-Essilor Co., Ltd.), 08 May 2008 (08.05.2008), claim 1 & EP 2078977 A1 | 4-5 |
| Y | JP 2004-126532 A (Hoya Corp.), 22 April 2004 (22.04.2004), claims 1, 2 & US 2004/0021966 A1 & EP 1387187 A1 & KR 10-2004-0012488 A & CN 1480745 A & AT 444500 T | 4-5 |
| A | JP 2002-296406 A (Sumitomo Chemical Co., Ltd.), 09 October 2002 (09.10.2002), paragraphs [0031] to [0033]; fig. 3 to 8 & US 2002/0142151 A1 & KR 10-2002-0077152 A & CN 1379250 A | 1-16 |
| A | JP 2002-296405 A (Sumitomo Chemical Co., Ltd.), 09 October 2002 (09.10.2002), paragraph [0026]; fig. 1 to 3 (Family: none) | 1-16 |
| A | JP 6-043304 A (Nikon Corp.), 18 February 1994 (18.02.1994), paragraphs [0051], [0052]; fig. 10 & US 5513038 A & EP 586050 A1 & DE 69315504 T | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012243956 A
- JP H1130703 B
- JP 2006251760 A
- JP 2007127681 A
- JP H455615 B